# EUROPEAN PATENT APPLICATION

(11) **EP 1 681 887 A1**
(43) Date of publication of application: **19.07.2006**
(21) Application number: 03818961.9
(22) Date of filing: 07.11.2003
(51) Int. Cl.: H04Q 7/38

(54) **MOBILE STATION, COMMUNICATION SYSTEM, COMMUNICATION CONTROL METHOD**

(71) Applicant: MITSUBISHI DENKI KABUSHIKI KAISHA, Chiyoda-ku, Tokyo 100-8310 (JP)
(72) Inventor: NIWANO, Kazuhito, c/o Mitsubishi Denki Kabushiki K, Tokyo 100-8310 (JP)
(74) Representative: Popp, Eugen
(86) International application number: PCT/JP2003/014202
(87) International publication number: WO 2005/046282

(57) **Abstract**

In accordance with the present invention, there is provided a mobile station (102) which transmits and receives packet data to and from a base station according to an assigned schedule such as a transmission timing which the base station determines based on priority information on the priority of each packet data received from each mobile station (102), the mobile station (102) including a transmission data storage unit (402) for temporarily storing at least one or more packet data inputted thereto, a priority control unit (405) for generating priority information which the above-mentioned base station uses for determination of the above-mentioned schedule in advance based on the priority of at least the one or more packet data stored in the transmission data storage unit (402), and a transmitting unit (408) for transmitting the priority information generated by the priority control unit (405) to the above-mentioned base station. Therefore, in order to generate a schedule such as a transmission timing at which the base station communicates with each mobile station, the base station can know the priority of packet data stored in each mobile station in advance, and can recognize the existence of a mobile station which is trying to transmit packet data with a high priority to the base station at an early stage. As a result, the base station can assign a transmission timing etc. quickly to the mobile station in question.

## Description

### Field of the Invention

The present invention relates to a mobile station which communicates packet data in a mobile communications system with CDMA (Code Division Multiple Access).

### Background of the Invention

In recent years, a telecommunications protocol which is called a third generation as a high-speed CDMA mobile-communications method is adopted as IMT-2000 in the International Telecommunications Union (ITU), and, as for W-CDMA (FDD: Frequency Division Duplex), commercial services were started in Japan in 2001. The W-CDMA (FDD) method aims at providing a transmission speed of the order, at maximum, of 2 Mbps (Mega bit per sec) for each mobile station, and the first specification of the W-CDMA method was determined, as the released 1999th version summarized in 1999, by the standardization organization 3GPP (3rd. Generation Partnership).

As a document proposed based on this specification, an on-demind channel assignment method for uplink is proposed by R1-030067 "AH64: Reducing control channel overhead for Enhanced Uplink" (referred to as nonpatent reference 1 from here on).

This document is disclosed on the Internet as follows: URL:http://www.3gpp.org/ftp/tsg_ran/WG1_RL1/TSGR1_30/Docs/Z ips/Rl-030067.zip >[searched on May 15, 2003]

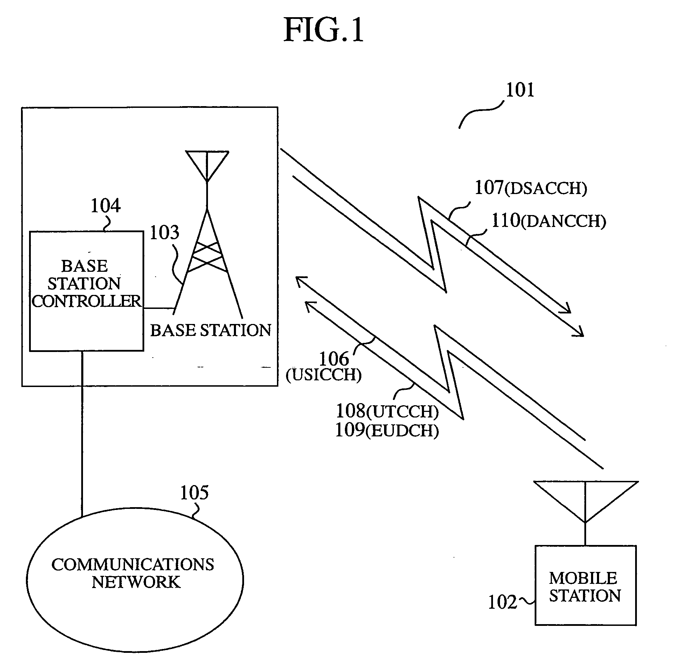

Referring now to Fig.1 of the above-mentioned nonpatent reference 1, there is shown a technology for making a mobile station (UE: User Equipment) having packets to be transmitted transmit a request for permission to transmit packet data to a base station (Node-B) via a channel for transmission request (USICCH: Uplink Scheduling Information Control Channel), making the base station issue a transmission timing assignment instruction or the like, via a downlink channel for assignment (DSACCH: Downlink Scheduling Assignment Control Channel), to the mobile station in response to the request, and then making the mobile station to send out data onto a channel for data transmission (EUDCH: Enhanced Uplink Dedicated Transport Channel) according to the instruction to transmit the data to the base station. In addition, the mobile station is made to separately send out information, such as a modulation method which is to be used at the time of transmission of packet data, onto a modulation type information channel (UTCCH: Uplink TFRI Control Cannel), to transmit the information to the base station.

Packet data transmission methods for the related art CDMA mobile communications include a method (for example, refer to JP, 9-233051,A (referred to as patent reference 1 from here on)) of, when packet data to be transmitted is generated in each mobile station, making each mobile station transmit a transmission request signal including information about the amount of the packet data to be transmitted to the base station, making the base station transmit a transmission enabling signal specifying both a transmission timing at which each mobile station transmits packet data and a spreading code which each mobile station should use at the time of transmission of packets to the base station in response to the transmission request signal from each mobile station, and making each mobile station carry out transmission of the packet data to the base station according to the transmission timing and spreading signal specified by the base station.

Using this communications method, a collision of packet data transmitted from each mobile station with other packet data can be avoided, and efficient packet data transmission can be implemented.

A problem with this transmission method is, however, that when a transmission timing and a spreading signal are assigned to a mobile station which is trying to transmit a large amount of packet data to the base station, even if another mobile station which is going to transmit data to be transmitted having a higher priority, such as voice data, as compared with packet data including mail data or the like exists in the system in the meantime, the base station cannot assign any transmission timing and any spreading signal to the other mobile station, and this results in a delay in the transmission timing of the other mobile station and the transmission speed (throughput) of the whole of the mobile communications system cannot be increased, thereby reducing the efficiency of use of radio resources.

Packet data transmission methods for the related art CDMA mobile communications also include a reserved-type access packet transmission method (for example, refer to JP,2000-224231,A (referred to as patent reference 2 from here on)) of making a base station determine channels via which a mobile station transmits and receives packet data to and from the base station and a schedule, such as a transmission timing at which the mobile station transmits packets to the base station, making the base station notify this schedule to the mobile station to enable the mobile station to transmit and receive packet data based on the schedule transmitted from the base station, and making the base station define a determination priority for every packet to be transmitted, and assign a longer traffic channel to packets having a high determination priority on a priority basis.

The above-mentioned determination priority which the base station uses to generate a schedule, such as a transmission timing, which the base station uses so as to communicate with the mobile station is determined as follows:

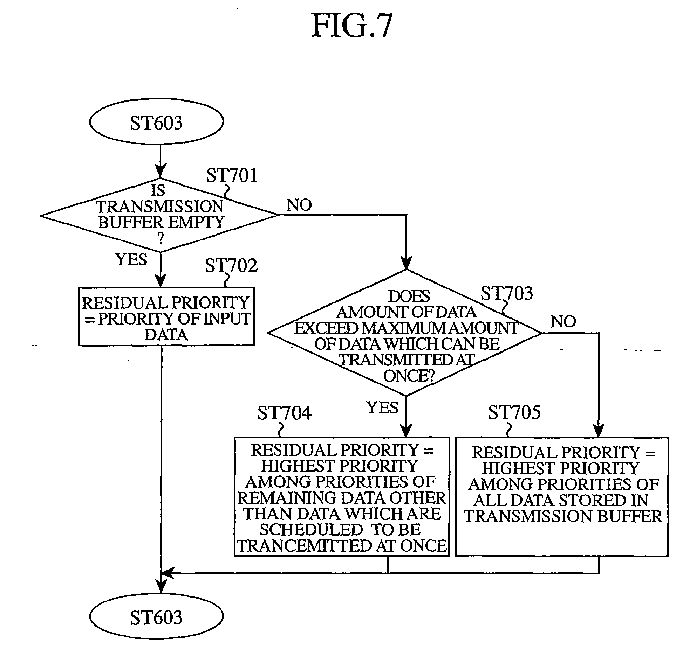

In a packet data control information memory of the base station, a mobile station management table, a packet management table, a schedule management table, and a traffic channel management table are held, and information recorded in each table is used for the determination of the schedule by the base station (refer to paragraph number 0088 and Figs. 7, 17, 18, 19, and 24 of patent reference 2).

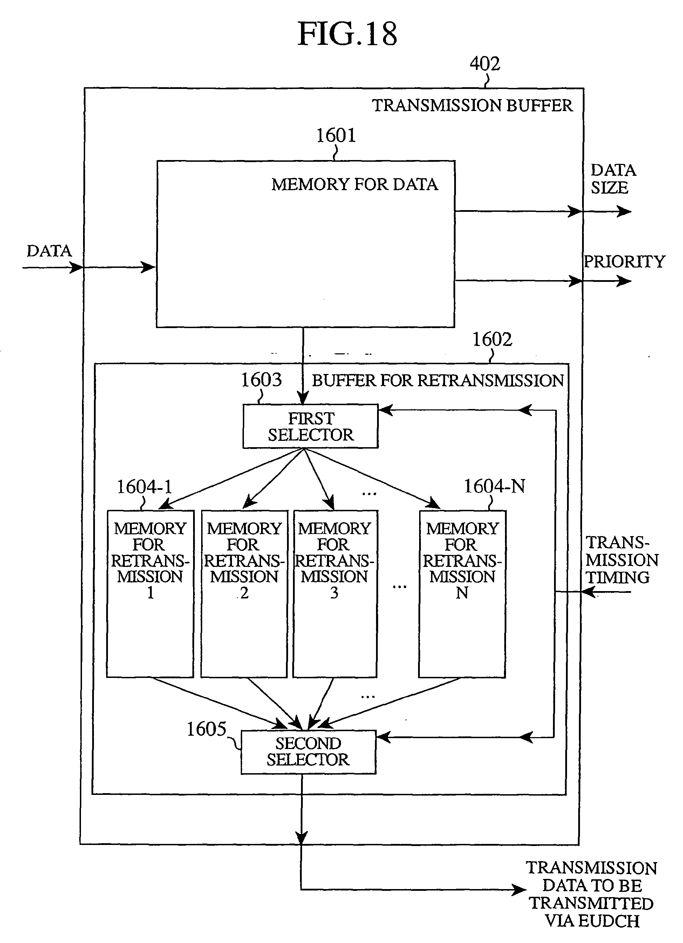

The above-mentioned determination priority is managed with the packet management table among these tables (refer to Fig. 18 of patent reference 2).

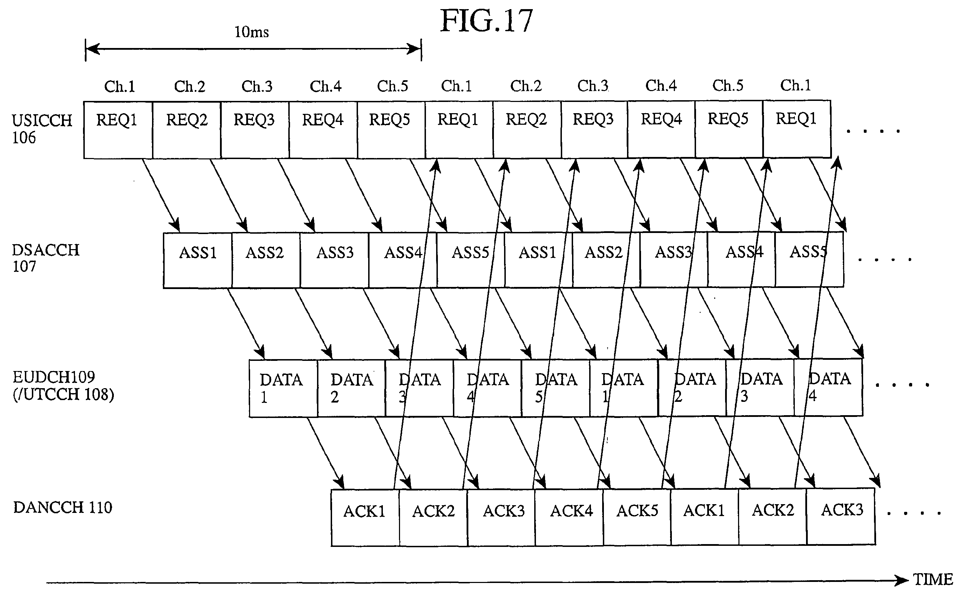

In the mobile station management table, information on a priority agreement about each mobile station according to a prior contract between a packet communication service user and a service provider, the connect time of a packet data service, the frequency of occurrence of packets sent and received between the mobile station in question and the base station since a connection is established between them, the total amount of transmitted and received data, and the quality of the communications between the mobile station in question and the base station are stored, and weights are assigned to these pieces of information which are provided for each mobile station, respectively, according to determination of priorities, and are used as a determinant of the above-mentioned determination priority (refer to paragraphs 0090 and 0091, and Fig. 17 of patent reference 2).

Instead of the information on the priority agreement about each mobile station, which is stored in the above-mentioned mobile station management table, the base station uses priorities, which the sender desired and specified in the header portion of each packet to be transmitted, for the calculation of the determination priority which the base station uses to generate the schedule (refer to paragraphs 0103 to 0106 of patent reference 2).

Furthermore, the base station determines the above-mentioned determination priority which it uses to generate the schedule based on, for example, the priority which the sender desired and written in the header portion of packet data transmitted from the mobile station, desires, and or the type of the packet data (refer to paragraphs 0106, 0109, and 0110 of patent reference 2).

However, in accordance with this conventional invention, the determination priority which the base station uses for carrying out the scheduling is only the type of packet data or the like which the mobile station in question has transmitted to the base station immediately before transmission of packets is carried out according to the schedule.

Therefore, the base station cannot know the priority of each packet data which each mobile station staying in a service area is trying to transmit thereto in advance. For this reason, even though a mobile station which is trying to transmit packet data having a high priority to the base station exists in the service area, the base station cannot assign any transmission timing and so on quickly to the mobile station in question.

It is therefore an object of the present invention to provide a mobile station which transmits the priority of the whole of packet data which are stored therein and the mobile station is trying to transmit to a base station in advance before transmitting each packet data to the base station so that the base station can know the priority of the whole of the packet data stored in the mobile station to generate a schedule, such as a transmission timing at which the packet data are to be transmitted between the base station and the mobile station.

### Disclosure of the Invention

In accordance with the present invention, there is provided a mobile station which transmits and receives packet data to and from a base station according to an assigned schedule such as a transmission timing which the above-mentioned base station determines based on priority information about a priority of each packet data received from each mobile station, the mobile station including a transmission data storage unit for temporarily storing at least one or more packet data inputted thereto, a priority control unit for generating priority information which the above-mentioned base station uses for determination of the above-mentioned schedule in advance based on a priority of at least the one or more packet data stored in the transmission data storage unit, and a transmitting unit for transmitting the priority information generated by the priority control unit to the above-mentioned base station.

### Brief Description of the Figures

Fig. 1 is a diagram schematically showing the structure of a communications system in accordance with embodiment 1 of the present invention;
Fig. 2 is a sequence diagram in a case where a mobile station in accordance with embodiment 1 of the present invention carries out transmission of packet data to a base station;
Fig. 3 is a diagram showing the channel structure of a channel (USICCH) for transmission request;
Fig. 4 is a diagram showing the structure of the mobile station in accordance with embodiment 1 of the present invention;
Fig. 5 is a diagram showing the structure of the base station in accordance with embodiment 1 of the present invention;
Fig. 6 is a diagram showing a transmission procedure for transmitting packet data between the mobile station and the base station in accordance with embodiment 1 of the present invention;
Fig. 7 is a diagram for explaining a calculation procedure for calculating a residual priority of packet data in ST603 of Fig. 6;
Fig. 8 is a diagram for explaining the calculation procedure for calculating the residual priority of packet data in ST603 of Fig. 6;
Fig. 9 is a diagram for explaining the calculation procedure for calculating the residual priority of packet data in ST603 of Fig. 6;
Fig. 10 is a diagram showing a transmission procedure for transmitting packet data between a mobile station and a base station in accordance with embodiment 2 of the present invention;
Fig. 11 is a diagram showing an example of the channel format of a channel for data transmission including residual priority information;
Fig. 12 is a diagram showing the structure of the base station in accordance with embodiment 2 of the present invention;
Fig. 13 is a diagram showing the transmission procedure for transmitting packet data between the mobile station and the base station in accordance with embodiment 2 of the present invention;
Fig. 14 is a diagram showing an example of the channel format of a type-of-modulation information channel including the residual priority information;
Fig. 15 is a sequence diagram of operation mode switching processing for setting of priority information in accordance with embodiment 3 of the present invention;
Fig. 16 is a diagram showing a signaling list for switching among operation modes for a mobile station, a base station, and a base station controller in accordance with embodiment 3 of the present invention;
Fig. 17 is a diagram showing a principle-of-operation timing chart of a parallel retransmission method which is an on-demind type channel assignment method;
Fig. 18 is a diagram showing the internal structure of a transmission buffer of the mobile station according to embodiment 3 of the present invention;
Fig. 19 is a diagram showing a principle-of-operation timing chart of a parallel retransmission method which is an on-demind type channel assignment method, and is a diagram for especially explaining setting of a residual priority and the transmission operation to the base station; and
Fig. 20 is a diagram showing a principle-of-operation timing chart of a parallel retransmission method which is an on-demind type channel assignment method, and is a diagram for especially explaining setting of a residual priority and the transmission operation to the base station.

### Preferred Embodiments of the Invention

### Embodiment 1.

The invention according to embodiment 1 will be explained with reference to diagrams.

Fig. 1 is a diagram schematically showing the structure of a communications system in accordance with embodiment 1 of the present invention.

In Fig. 1, the communication system 101 is provided with a mobile station 102, a base station 103, and a base station controller 104. The base station 103 covers a sector or cell having a certain range, and communicates with two or more mobile stations 102. For the sake of simplicity, only one mobile station 102 is shown in Fig. 1. Communications can be carried out between the mobile station 102 and the base station 103 using two or more channels.

The base station controller 104 is connected to a network 105, such as a public telephone network, and relays packet communications between the base station 103 and the network 105.

In W-CDMA, the above-mentioned mobile station 102 is called UE (User Equipment), the base station 103 is called Node-B, and the base station controller 104 is called RNC (Radio Network Controller).

The combination of the base station 103 and base station controller 104 is called RAN (Radio Accuses Network).

USICCH (Uplink Scheduling Information Control Channel) 106 is a channel for transmission request via which the mobile station 102 transmits a transmission request to the base station. DSACCH (Downlink Scheduling Assignment Control Channel) 107 is a channel for assignment via which the base station 103 notifies scheduling result information, such as a transmission timing, which it has scheduled to the mobile station 102 after receiving the transmission request from the mobile station 102. UTCCH (Uplink TFRI Control Cannel) 108 is a type-of-modulation information channel via which the mobile station 102 sends information indicating the type of modulation at the time of -transmission of packet data, and so on to the base station 103. EUDCH (Enhanced Uplink Dedicated Transport Channel) 109 is a channel for data transmission via which the mobile station 102 transmits packet data to the base station 103. DANCCH (Downlink Ack/Nack Control Channel) 110 is a channel for notification via which the base station 103 notifies a result of reception of data to the mobile station 102.

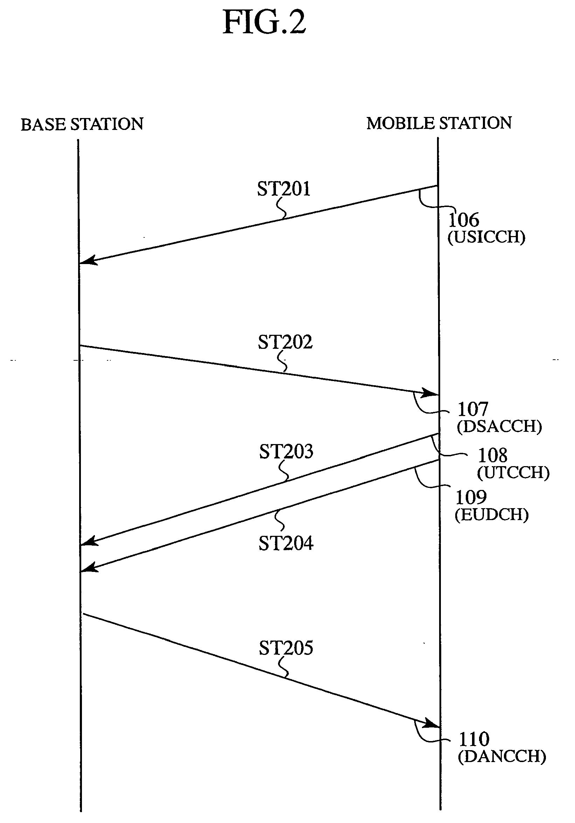

Fig. 2 is a sequence diagram in a case where the mobile station in accordance with embodiment 1 of the present invention carries out transmission of packet data to the base station.

When packet data which should be transmitted to the base station 103 are generated in the mobile station 102, the mobile station 102 sends out a transmission data size (Queue Size), transmission power margin information (Power Margin) indicating a margin to the maximum transmission power of the mobile station 102, and residual priority information (Residual Priority) which the base station 103 uses for determination of a schedule onto the channel (USICCH) 106 for transmission request to the base station 103 (in step (referred to as ST from here on) 201). The residual priority information (Residual Priority) will be concretely mentioned later.

After receiving those pieces of information via the channel (USICCH) 106 for transmission request, the base station 103 determines a schedule such as a transmission timing at which the base station 103 transmits and receives packet data to and from the mobile station 102 and other mobile stations 102 based on those pieces of information, such as the transmission data size (Queue Size), margin (Power Margin) to the maximum transmission power of the mobile station, and residual priority information (Residual Priority), which are sent out onto the channel (USICCH) 106 for transmission request. The base station 103 then notifies scheduling result information including the determined transmission timing, as the amount of maximum permissible power margin (Max Power Margin) and the transmission timing information (Map), to the mobile station 102 by sending out them onto the channel (DSACCH) 107 for assignment (in ST202).

Next, the mobile station 102 sends a modulation method (TFRI: Transport Format Resource Indicator) which it is currently using, and so on the type-of-modulation information channel (UTCCH) 108 to transmit them to the base station 103 (in ST203).

The mobile station 102 then sends out packet data onto the channel (EUDCH) 109 for data transmission to transmit them to the base station 103 using the amount of maximum permissible power margin assigned to mobile station 102 (Max Power Margin) and the transmission timing assigned to mobile station 102 using the transmission timing information (Map), which result from the generation of the schedule by the base station 103 (in ST204).

Next, the base station 103 extracts the packet data sent out onto the channel (EUDCH) 109 for data transmission so as to determine whether or the extracted packet data is correct based on the communication information, such as the modulation method for the data transmitted thereto via the channel (EUDCH) 109 for data transmission, the communication information being sent out onto the type-of-modulation information channel (UTCCH) 108. And, when determining that the extracted packet data is correct, the base station 103 sends out ACK onto the channel (DANCCH) 110 for notification to transmit it, as a determination result, -to the-mobile station 102, and sends out NACK onto the channel (DANCCH) 110 for notification to transmit it, as a determination result, to the mobile station 102 otherwise.

When receiving ACK from the base station 103, the mobile station 102 transmits a transmission request, via the channel (USICCH) 106 for transmission request, to the base station 103 for the next transmission of packet data (in ST201), and repeats the above-mentioned transmission cycle (ST201 to ST205).

On the other hand, when receiving NACK from the base station 103, the mobile station 102 transmits a transmission request, via the channel (USICCH) 106 for transmission request, to the base station 103 in order to transmit the same packet data to the base station again (in ST201), and repeats the above-mentioned transmission cycle (in ST201 to ST205).

In this embodiment, it is assumed that the mobile station 102 transmits a transmission request, via the channel (USICCH) 106 for transmission request, to the base station 103 at scheduling transmission duration (Scheduling Transmission Interval) determined by the base station 103.

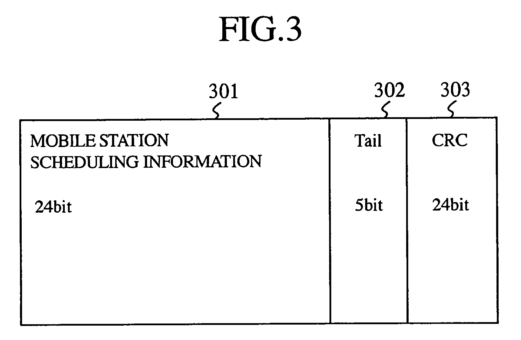

Fig. 3 is a diagram showing the channel structure of the channel (USICCH) for transmission request.

In Fig. 3, the channel (USICCH) 106 for transmission request includes 11-bit mobile station scheduling data (UE Scheduling Information) 301, 5-bit Tail 302, and 24-bit cyclic redundancy check (CRC: Cyclic Redundancy Check) information 303.

The mobile station scheduling data (UE Scheduling Information) 301 includes a 4-bit transmission data size (Queue size) 301a indicating the size of transmission data, i.e., data to be transmitted from the mobile station 102 to the base station 103, 4-bit transmission power margin information (Power Margin) 301b indicating a margin to the maximum transmission power of the mobile station 102, and 3-bit residual priority information (Residual Priority) 301c which the base station 103 uses, as priority information, for determination of the schedule. The setting of the residual priority information (Residual Priority) 301c which the base station uses for determination of the schedule will be concretely mentioned later.

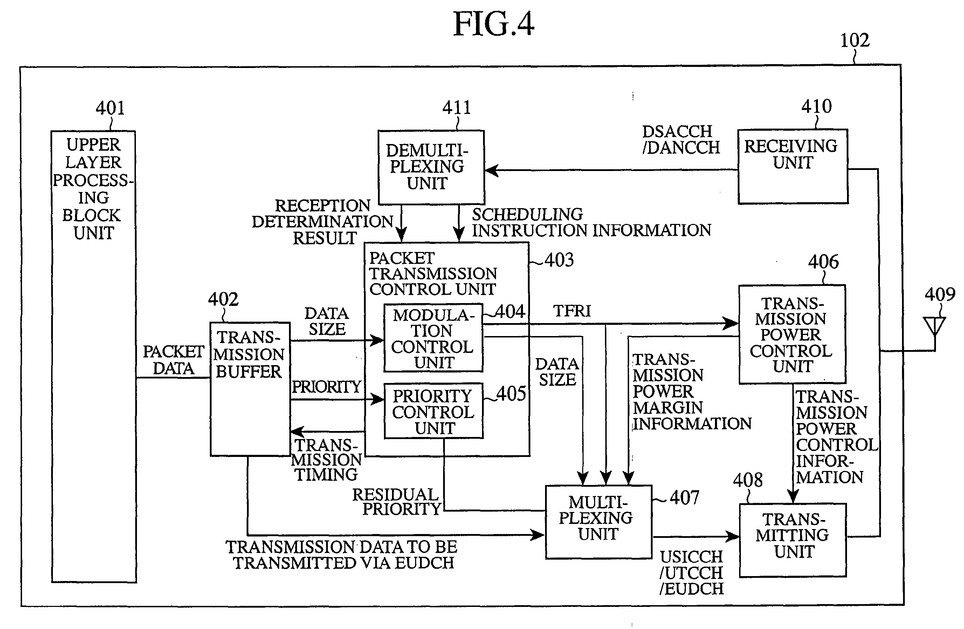

Fig. 4 is a diagram showing the structure of the mobile station in accordance with embodiment 1 of the present invention.

In Fig. 4, an upper layer processing block unit (Upper Layer) 401 of the mobile station 102 carries out predetermined processing using a known technique for a higher-level protocol layer, such as a TCP/IP layer, and inputs at least one or more packet data (Data) to be transmitted to the base station 103 into a transmission buffer (TX buffer) 402.

The transmission buffer (TX buffer) 402, which is disposed as a transmission data storage unit, reads priority (Priority), data size, and information (EUDCH TX data) on the transmission data itself, which are included in at least the one or more packet data (Data) inputted from the upper layer processing block unit (Upper Layer) 401, and delivers the data size (Queue size) currently being recorded in the transmission buffer (TX buffer) 402 to a modulation control unit (TFRI Control) 404, delivers the priority (Priority) to a priority control unit (Priority Control) 405, and delivers the information (EUDCH TX data) on the transmission data itself to a multiplexing unit (MUX) 407.

The packet transmission control unit (Packet-TX Control) 403 includes the modulation control unit (TFRI Control) 404 and priority control unit (Priority Control) 405, extracts the transmission timing (TX timing) with which the mobile station transmits data to the base station 103 from both the result of determination of reception (ASK/NACK) which is inputted from a below-mentioned demultiplexing unit (DEMIX) 411, and scheduling instruction information (Scheduling Assignment) from the base station 103, and delivers the transmission timing to the transmission buffer (TX buffer) 402.

The packet transmission control unit (Packet TX Control) 403 also recognizes the packet data recorded in the transmission buffer (TX buffer) 402 from the priority (Priority), data size, etc., and controls which packet data the mobile station should transmit to the base station and controls whether the mobile station should transmit all or some of the packet data to the base station. At this time, the packet transmission control unit (Packet TX Control) 403 also uses the scheduling instruction information (Scheduling Assignment) and result of determination of reception (ASK/NACK) transmitted from the base station 103.

The modulation control unit (TFRI Control) 404 determines the type of modulation for transmission of packet data to the base station 103 based on both the transmission data size (Queue size) inputted from the transmission buffer (TX buffer) 402, and the scheduling instruction information (Scheduling Assignment) inputted from the demultiplexing unit (DEMIX) 411, and delivers this type of modulation, as the type-of-modulation information (TRFI), to a transmission power control unit (Power Control) 406 and the multiplexing unit (MUX) 407. Furthermore, the modulation control unit (TFRI Control) 404-delivers the data size (Queue size) inputted from the transmission buffer (TX buffer) 402 to the multiplexing unit (MUX) 407.

Based on the priority (Priority) inputted from the transmission buffer (TX buffer) 402, the priority control unit (Priority Control) 405 determines residual priority information (Residual Priority), and delivers it to the multiplexing unit (MUX) 407. A method of determining the residual priority information (Residual Priority) will be concretely explained below.

The transmission power control unit (Power Control) 406 delivers the margin information on the transmission power (Power margin) to the multiplexing unit (MUX) 407, and delivers the transmission-power-control information (Power) required to transmit data to the base station 103 to the transmitting unit (TX) 408 according to the type-of-modulation information (TRFI) delivered from the modulation control unit (TFRI Control) 404.

The multiplexing unit (MUX) 407 forms a channel (USICCH) 106 for transmission request from the following three pieces of information: the residual priority information (Residual Priority) delivered from the priority control unit (Priority Control) 405, the transmission data size (Queue size) delivered from the modulation control unit (TFRI Control) 404, and the transmission power margin information (Power margin) delivered from the transmission power control unit (Power Control) 406, forms a type-of-modulation information channel (UTCCH) 108 from the type-of-modulation information (TRFI) delivered from the modulation control unit (TFRI Control) 404, forms a channel (EUDCH) 109 for data transmission from the information (EUDCH TX data) on the transmission data itself delivered from the transmission buffer (TX buffer) 402, and delivers these channels to the transmitting unit (TX) 408 after carrying out code multiplexing of the channels.

The transmitting unit (TX) 408 converts the code-multiplexed channel (USICCH) 106 for transmission request, type-of-modulation information channel (UTCCH) 108, and channel (EUDCH) 109 for data transmission, which are delivered thereto from the multiplexing unit (MUX) 407, into a radio frequency signal by using a known technique, amplifies the radio frequency signal so that it has transmission power required for transmission by using a known technique based on the transmission-power-control information (Power) delivered from the transmission power control unit (Power Control) 406, and outputs the amplified radio frequency signal to a transmission antenna 409.

The transmission antenna 409 transmits the amplified radio frequency signal delivered from the transmitting unit (TX) 408, as an uplink, to the base station 103. In contrast, the transmission antenna 409 receives a radio frequency signal, as a downlink, transmitted from the base station 103, and outputs it to a receiving unit (RX) 410.

The receiving unit (RX) 410 converts the radio frequency signal delivered from the transmission antenna 409 into baseband signals by using a known technique, and outputs these channel signals to the demultiplexing unit (DEMUX) 411.

After demultiplexing the channel signals into a channel (DSACCH) 107 for assignment and a channel (DANCCH) 110 for notification by using a known technique, the demultiplexing unit (DEMUX) 411 outputs the scheduling instruction information (Scheduling Assignment) included in the channel (DSACCH) 107 for assignment, and the reception determination result (ASK/NACK) included in the channel (DANCCH) 110 for notification to the packet transmission control unit (Packet TX Control) 403.

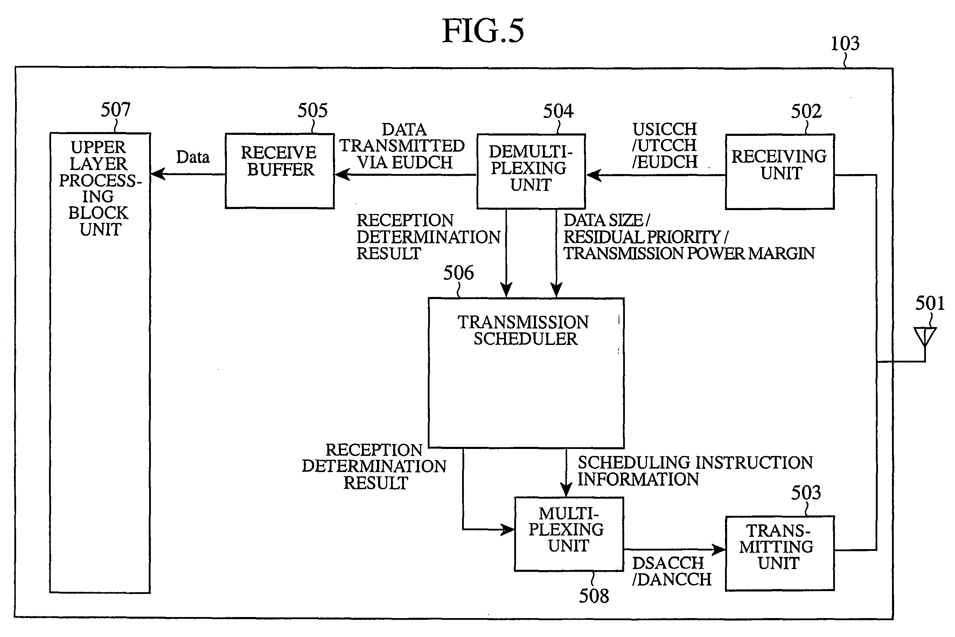

Fig. 5 is a diagram showing the structure of the base station in accordance with embodiment 1 of the present invention.

In Fig. 5, a transmit/receive antenna 501 receives radio frequency signals via various uplink channels, such as the channel (USICCH) 106 for transmission request, type-of-modulation information channel (UTCCH) 108, and channel (EUDCH) 109 for data transmission, which are sent from the mobile station 102, and outputs them to a receiving unit (RX) 502. The transmit/receive antenna 501 also transmits a radio frequency signal associated with each downlink channel, which is delivered from a transmitting unit (TX) 503, to the mobile station 102.

The receiving unit (RX) 502 converts various radio frequency signals sent on an uplink channel (USICCH) 106 for transmission request delivered from the transmit/receive antenna 501, an uplink type-of-modulation information channel (UTCCH) 108, and an uplink channel (EUDCH) 109 for data transmission into various channel signals which are so-called baseband signals by using a known technique, and outputs them to a demultiplexing unit (DEMUX) 504.

The demultiplexing unit (DEMUX) 504 demultiplexes the baseband signals into which the various radio frequency signals sent out onto the uplink channel (USICCH) 106 for transmission request, uplink type-of-modulation information channel (UTCCH) 108, and uplink channel (EUDCH) 109 for data transmission are converted by the receiving unit by using a known technique, and extracts received data and various pieces of information from the channels and outputs them to a receive buffer (RX buffer) 505 and a transmission scheduler (Scheduler) 506. In other words, the demultiplexing unit (DEMUX) 504 extracts the size information on the size of packet data (Queue Size), residual priority information (Residual priority) and transmission power margin information (Power margin) from the channel (USICCH) 106 for transmission request, and outputs them to the transmission scheduler (Scheduler) 506. Furthermore, the demultiplexing unit (DEMUX) 504 extracts information indicating the type of modulation (TFRI) from the type-of-modulation information channel (UTCCH) 108, and demodulates the transmitted data using this type of modulation (TFRI) so as to extract the transmitted data itself from the channel (EUDCH) 109 for data transmission and outputs the received data to a receive buffer (RX buffer) 507.

Every time when data extracted from each of the channels is input to the receive buffer (RX buffer) 505, the demultiplexing unit (DEMUX) 504 determines whether or not the input data is correct, and, when determining that the input data is correct, outputs ACK, as determination result information, to a multiplexing unit (MUX) 508 via the transmission scheduler (Scheduler) 506, and outputs NACK, as determination result information, to the multiplexing unit (MUX) 508 otherwise. The receive buffer (RF buffer) 505 also outputs the transmitted data (EUDCH RX data) itself, which is delivered from the demultiplexing unit (DEMUX) 504 and the base station has received correctly from the mobile station 102, to an upper layer processing block unit (Upper layer) 507 as transmitted data (Data).

The transmission scheduler (Scheduler) 506 determines a schedule, such as a transmission timing at which each mobile station 102 transmits data to the base station, according to the size information on the size of packet data stored in the transmission buffer 402 (Queue Size), the residual priority information provided as priority information (Residual priority), and the transmission power margin information (Power margin), which are sent to the base station via the channel (USICCH) 106 for transmission request by each mobile station 102, and outputs scheduling instruction information (Scheduling assignment) on the determined schedule to the multiplexing unit (MUX) 508.

The multiplexing unit (MUX) 508 sends out the scheduling instruction information (Scheduling assignment) delivered from the transmission scheduler (Scheduler) 506 onto the channel (DSACCH) 107 for assignment so as to deliver it to the transmitting unit (TX) 503. The multiplexing unit (MUX) 508 also sends out the determination result information (ACK/NACK) delivered via the transmission scheduler (Scheduler) 506 from the demultiplexing unit (DEMUX) 504 onto the channel (DANCCH) 110 for notification, and outputs it to the transmitting unit (TX) 503.

A part of the above-mentioned base station 103 can be disposed in the base station controller 104.

Next, the transmission procedure for transmitting packet data between the mobile station and the base station in accordance with embodiment 1 of the present invention will be explained.

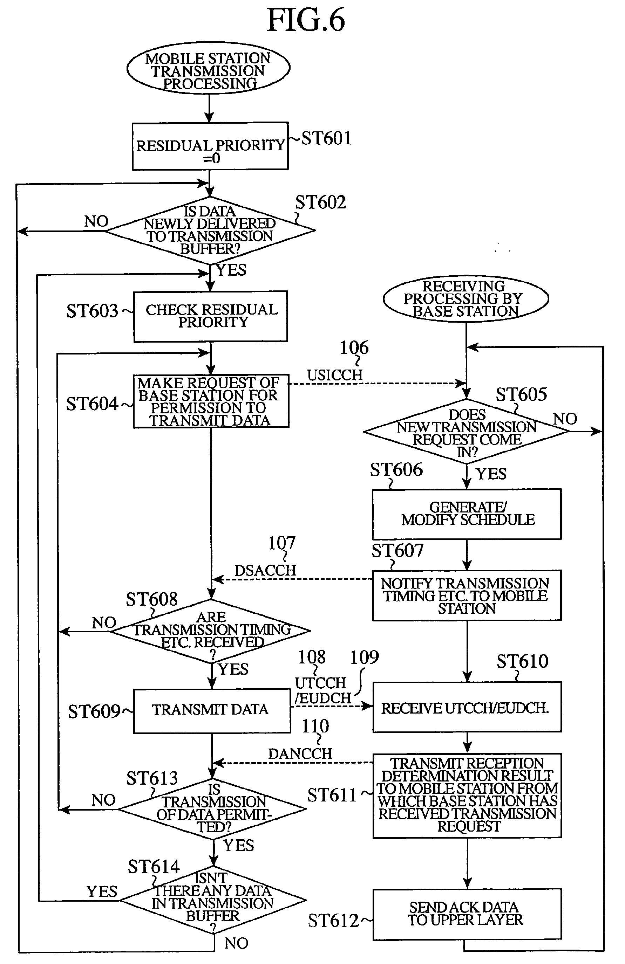

Fig. 6 is a diagram showing the transmission procedure for transmitting packet data between the mobile station and the base station in accordance with embodiment 1 of the present invention.

In Figs. 4 and 6, when the mobile station (UE) 102 tries to transmit packet data to the base station (Node-B) 103, the mobile station sets the residual priority (Residual Priority) which is to be set by the priority control unit (Priority Control) 405 to a default value of 0 (in ST601). A method of setting the residual priority (Residual Priority) will be explained below with reference to Fig. 7.

The upper layer processing block unit (Upper Layer) 401 then performs predetermined processing for the higher-level protocol layer, and delivers each of two or more packet data to the transmission buffer (TX buffer) 402. Hereafter, assume that the processing in the upper layer processing block unit (Upper Layer) 401 is the TCP/IP layer.

When receiving two or more IP packet data delivered thereto from the upper layer processing block unit (Upper Layer) 401, the transmission buffer (TX buffer) 402 reads the priority (Priority), data size (Queue size), and information (EUDCH TX data) on the transmission data itself included in each packet data (Data), and outputs the data size to the modulation control unit (TFRI Control) 404, outputs the priority (Priority) to the priority control unit (Priority Control) 405, and outputs the information (EUDCH TX data) on the transmission data itself to the multiplexing unit (MUX) 407.

The information (EUDCH TX data) on the priority (Priority), data size, and transmission data itself are recorded in, for example, the header portion of each packet data.

For example, the priority (Priority) can be defined as any one of five levels of 0, 1, 2, 3, 4, and 5. The highest priority (Priority) of 5 is assigned to voice data, the second highest priority of 4 is assigned to TV telephone image data, the third highest priority of 3 is assigned to dynamic-image data other than TV telephone data, the fourth highest priority of 2 is assigned to static-image data, the fifth highest priority of 1 is assigned to character-string data, such as e-mail, and the lowest priority 0 is a default.

When not receiving any two or more packet data delivered thereto, the transmission buffer (TX buffer) 402 continues monitoring reception of two or more packet data until two or more packet data are delivered thereto (in ST602).

The priority control unit (Priority Control) 405 then carries out calculation and setting of the residual priority (Residual Priority) based on the priority (Priority) delivered thereto from the transmission buffer (TX buffer) 402 (in ST603) . The calculation and setting of the residual priority will be explained concretely with reference to Fig. 1.

Fig. 7 is a diagram for explaining a procedure for calculating the residual priority for packet data in ST603 of Fig. 6.

### (In the case of the first transmission of packet data)

In Figs. 4 and 7, the packet transmission control unit (Packet TX Control) 403 determines whether or not any packet data is stored in the transmission buffer (TX buffer) 402 when two or more packet data are newly delivered to the transmission buffer (TX buffer) 402 (in ST701). In the case of the first transmission of packet data, there is no packet data in the data transmission buffer (TX buffer) 402 before, i.e., the data transmission buffer is empty. In this case, the priority control unit (Priority Control) 405 determines the residual priority (Residual Priority) using the priority (Priority) written in the header portion of each of the two or more packet data newly delivered to the data transmission buffer (in ST702) .

To be more specific, assuming a case where the two or more newly-delivered packet data include voice data of priority of 5, dynamic-image data of priority of 3 other than TV data, and character-string data of priority of 1, the priority control unit defines the priority of 5 which is the highest among the priorities of the two or more delivered packet data as the residual priority (Residual Priority).

On the other hand, when two or more packet data are delivered to the transmission buffer (TX buffer) 402 in a case where the second or subsequent transmission of packet data is performed and where some packet data are already stored in the transmission buffer (TX buffer) 402, the priority control unit processes steps ST703 to ST705 after returning from below-mentioned ST614 to ST603, which will be mentioned below in detail.

Then, in Figs. 4 and 6, the priority control unit (Priority Control) 405 outputs the determined residual priority information (Residual Priority), as priority information, to the multiplexing unit (MUX) 407.

Furthermore, the modulation control unit (TFRI Control) 404 delivers the transmission data size (Queue size) delivered thereto from the transmission buffer (TX buffer) 402 to the multiplexing unit (MUX) 407. In addition, the transmission power control unit (Power Control) 406 delivers the margin information on the transmission power (Power margin) to the multiplexing unit (MUX) 407.

Then, the multiplexing unit (MUX) 407 multiplexes the following three pieces of information: the residual priority information (Residual Priority) delivered thereto from the priority control unit (Priority Control) 405, transmission data size (Queue size) delivered thereto from the modulation control unit (TFRI Control) 404, and transmission power margin information (Power margin) delivered thereto from the transmission power control unit (Power Control) 406 into a channel (USICCH) 106 for transmission request, and outputs it to the transmitting unit (TX) 408.

Then, the transmitting unit (TX) 408 transmits by radio the channel (USICCH) 106 for transmission request to the base station (Node-B) 103 via the transmission antenna 409 (in ST604) .

After the transmitting unit transmits by radio the channel (USICCH) 106 for transmission request to the base station, the packet transmission control unit (Packet TX Control) 403 of the mobile station 102 then monitors reception of a channel (DSACCH) 107 for assignment.

Then, the transmit/receive antenna 501 of the base station (Node-B) 103 receives the channel (USICCH) 106 for transmission request from the mobile station (UE) 102, the receiving unit (RX) 502 converts a radio frequency signal received via the channel (USICCH) 106 for transmission request, which is delivered thereto from the transmit/receive antenna 501, into a baseband signal, and the demultiplexing unit (DEMUX) 504 extracts the size information (Queue Size) on the size of packet data, residual priority information (Residual priority), and transmission power margin information (Power margin), which are pieces of transmission request information, from the baseband signal received via the channel (USICCH) 106 for transmission request, and delivers them to the transmission scheduler (Scheduler) 506.

The transmission scheduler (Scheduler) 506 monitors whether a new channel (USICCH) 106 for transmission request is delivered to the base station from the mobile station 102, and, when a new channel (USICCH) 106 for transmission request is generated, shifts to step (ST606) in which the transmission scheduler generates a schedule, such as a transmission timing at which the mobile station 102 transmits IP packet data to the base station. When no channel (USICCH) 106 for transmission request is generated, the transmission scheduler (Scheduler) 506 repeatedly monitors whether a new channel (USICCH) 106 for transmission request is delivered to the base station from the mobile station 102 (in ST605).

Then, the transmission scheduler (Scheduler) 506 generates a schedule such as a transmission timing at which each mobile station 102 transmits data to the base station according to the size information (Queue Size) on the size of packet data which are stored in the transmission buffer (TX buffer), residual priority information (Residual priority) and transmission power margin information (Power margin), and generates and corrects scheduling instruction information (Scheduling assignment) on the schedule (in ST606). At this time, the transmission scheduler (Scheduler) 506 assigns a transmission timing and so on to a mobile station 102 which is going to transmit packet data having a higher residual priority (Residual priority) on a priority basis.

The transmission scheduler (Scheduler) 506 outputs the scheduling instruction information (Scheduling assignment) to the multiplexing unit (MUX) 508, and the multiplexing unit (MUX) 508 sends the scheduling result information (Scheduling assignment) on the channel (DSACCH) 107 for assignment so as to output it to the transmitting unit (TX) 503. In this way, the scheduling instruction information (Scheduling assignment), such as a transmission channel, is sent out onto the channel (DSACCH) 107 for assignment, and is notified and transmitted, via the transmit/receive antenna 501, to the mobile station 102 (in ST607).

Then, the transmit/receive antenna 409 of the mobile station (UE) 102 receives the channel (DSACCH) 107 for assignment, the receiving unit (RX) 410 converts the channel (DSACCH) 107 for assignment into a baseband signal by using a known technique, and the demultiplexing unit (DEMUX) 411 extracts the scheduling instruction information (Scheduling assignment), such as a transmission channel, from the channel (DSACCH) 107 for assignment, and outputs it to the packet transmission control unit (TX Packet Control) 403.

Then, when the packet transmission control unit (Packet TX Control) 403 determines that it has received the channel (DSACCH) 107 for assignment from the scheduling instruction information (Scheduling Assignment) received from the base station 103 (in ST608), the packet transmission control unit (Packet TX Control) 403 extracts the transmission timing at which the mobile station transmits packet data to the base station 103, etc. from the scheduling instruction information (Scheduling Assignment), and outputs the transmission timing (TX timing) to the transmission buffer (TX buffer) 402. On the other hand, the packet transmission control unit (Packet TX Control) 403 returns to step (ST604) in which it makes a request of the base station 103 for permission to transmit packet data when not determining that the packet transmission control unit (Packet TX Control) 403 has received the channel (DSACCH) 107 for assignment (in ST608).

Then, the transmission buffer (TX buffer) 402 of the mobile station (UE) 102 reads the information (EUDCH TX data) on the transmission data itself included in at least one or more packet data (Data), and outputs the information (EUDCH TX data) on the transmission data itself to the multiplexing unit (MUX) 407, and the modulation control unit (TFRI Control) 404 determines the type of modulation for transmission of packet data to the base station 103 according to a transmission time period (MAP) during which transmission of packet data can be permitted by the base station 103, and outputs, as type-of-modulation information (TRFI), the type of modulation to the multiplexing unit (MUX) 407 and transmission power control unit 406.

After multiplexing the information (EUDCH TX data) on at least one or more packet data to be transmitted themselves based on the type-of-modulation information (TRFI), the multiplexing unit (MUX) 407 forms a channel (EUDCH) 109 for data transmission from the multiplexed information (EUDCH TX data) on the data to be transmitted themselves. Furthermore, after forming a type-of-modulation information channel (UTCCH) 108 from the type-of-modulation information (TRFI) and carrying out code multiplexing of these channels, the multiplexing unit (MUX) 407 outputs the multiplexed channels to the transmitting unit (TX) 408.

In the case of embodiment 4 which will be mentioned later, the multiplexing unit processes each information (EUDCH TX data) of the above-mentioned packet data sequentially without multiplexing the information (EUDCH TX data) on at least the one or more packet data to be transmitted themselves.

Then, the transmitting unit (TX) 408 converts the type-of-modulation information channel (UTCCH) 108 and channel (EUDCH) 109 for data transmission into a radio frequency signal by using a known technique, amplifies the radio frequency signal so that it has transmission power required for transmission by using a known technique based on the transmission power control information (Power) delivered thereto from the transmission power control unit (Power Control) 406, and outputs the amplified radio frequency signal to the transmission antenna 409, and the transmit/receive antenna 409 transmits the radio frequency signal to the base station 103 (in ST609).

Then, the transmit/receive antenna 501 of the base station (Node-B) 103 receives the type-of-modulation information channel (UTCCH) 108 which is an uplink transmitted from the mobile station 102, and the radio frequency signal via the channel (EUDCH) 109 for data transmission, and delivers them to the receiving unit (RX) 502, and the receiving unit (RX) 502 converts each of the radio frequency signals which are the type-of-modulation information channel (UTCCH) 108 and channel (EUDCH) 109 for data transmission into a baseband signal by using a known technique, and outputs it to the demultiplexing unit (DEMUX) 504. The demultiplexing unit (DEMUX) 504 extracts information indicating the type of modulation (TFRI) from the type-of-modulation information channel (UTCCH) 108, and demodulates the channel (EUDCH) 109 for data transmission using this type of modulation (TFRI) so as to extract the transmitted data (EUDCH TX data) itself from the channel (EUDCH) 109 for data transmission. The demultiplexing unit (DEMUX) 504 then determines whether or not the transmitted data (EUDCH TX data) itself which is received and demultiplexed is correct, and, when determining that the transmitted and extracted data is correct, outputs the transmitted data (EUDCH TX data) itself to the receive buffer (RX buffer) 505. On the other hand, when determining that the transmitted and extracted data is not correct, the demultiplexing unit (DEMUX) 504 discards the transmitted data (EUDCH TX data) itself.

When determining that the transmitted and extracted data is correct, the demultiplexing unit (DEMUX) 504 outputs ACK, as determination result information, to the multiplexing unit (MUX) 508 via the transmission scheduler (Scheduler) 506, or outputs NACK, as determination result information, to the multiplexing unit (MUX) 508 otherwise (in ST610).

Then, the multiplexing unit (MUX) 508 sends out the determination result information (ACK/NACK) onto the channel (DANCCH) 110 for notification so as to transmit it to the mobile station (UE) 102 via the transmitting unit (TX) 503 and transmit/receive antenna 501 (in ST611).

Then, the receive buffer (RX buffer) 505 delivers the packet data which it has received correctly to the upper layer processing block unit (507) (in ST612).

Then, the transmit/receive antenna 409 of the mobile station 102 (UE) receives the channel (DANCCH) 110 for notification transmitted thereto from the base station (Node-B) 103, the receiving unit (RX) 410 converts the channel (DANCCH) 110 for notification into a baseband signal, and the demultiplexing unit (DEMUX) 411 extracts the reception determination result (ASK/NACK) included in the channel (DANCCH) 110 for notification and outputs it to the packet transmission control unit (Packet TX Control) 403.

Then, when receiving ACK as the reception determination result (ACK/NACK), that is, when the mobile station has transmitted packet data to the base station 103 correctly (in ST613), the packet transmission control unit (Packet TX Control) 403 checks to see whether packet data which should be further transmitted to the base station remains in the transmission buffer (TX buffer) 402 (in ST614).

On the other hand, when receiving NACK, that is, when the mobile station has not transmitted packet data to the base station 103 correctly (in ST613), the packet transmission control unit (Packet TX Control) 403 shifts to step (ST604) in which it makes a request of the base station (Node-B) 103 for permission to transmit packet data again.

When no packet data which should be further transmitted to the base station remains in the transmission buffer (TX buffer) 402, the packet transmission control unit returns to ST602 in which it monitors whether or not new packet data is delivered to the transmission buffer (TX buffer) 402 (in ST602) . On the other hand, when packet data which should be further transmitted to the base station remains in the transmission buffer (TX buffer) 402, the packet transmission control unit returns to ST603 in which it makes a request of the base station (Node-B) 103 for permission to transmit packet data to the base station (in ST614).

### (In a case where the transmission of packet data is not the first one)

When the first transmission of packet data is completed (in ST613), and packet data to be transmitted remains in the transmission buffer (TX buffer) 402 (in ST614), the packet transmission control unit determines the residual priority (Residual Priority) again (in ST603).

The determination of the residual priority will be explained concretely with reference to Fig. 7.

When two or more packet data having an amount which exceeds the maximum amount of data which can be transmitted to the base station 103 at a time are delivered to the transmission buffer (TX buffer) 402 (in ST703), the priority control unit (Priority Control) 405 defines, as the residual priority (Residual Priority), the highest priority (Priority) among the priorities of remaining packet data other than packet data which are scheduled to be transmitted to the base station 103 for the next time, the remaining packet data including the packet data which already exist in the transmission buffer (TX buffer) 402, which is disposed as a transmission data storage unit, and two or more packet data which are newly delivered to the transmission buffer (TX buffer) 402.

To be more specific, a range within which the maximum amount of data which can be transmitted at a time has to fall is determined according to, for example, a predetermined format which is defined in advance according to the natures of factors, such as a transmission rate regulation which complies with the specification, a maximum power margin, a transmission period shown by MAP, the maximum transmission power of the mobile station 102, and a propagation environment. Assume that each of the mobile station 102 and the base station 103 has such a predetermined format.

When packet data is delivered to the transmission buffer (TX buffer) 402 which is disposed as a transmission data storage unit, and the amount of packet data stored in the transmission buffer (TX buffer) 402 exceeds the maximum amount of data which can be transmitted to the base station 103 at a time (in ST703), the priority control unit then defines, as the residual priority (Residual Priority), the highest priority among the priorities of remaining packet data other than packet data which are scheduled to be transmitted to the base station 103 (in ST704) .

As an alternative, the priority control unit can define, as the residual priority (Residual Priority), the highest priority among the priorities of remaining packet data other than a total volume of packet data which is scheduled to be transmitted to the base station 103 over a time period during which transmission of packet data is carried out a predetermined number of times. The predetermined number of times that transmission of packet data is carried out can be arbitrarily determined by the mobile station 102 or base station 103.

On the other hand, even if packet data is delivered to the transmission buffer (TX buffer) 402, the priority control unit defines, as the residual priority, the highest priority (Residual Priority) among the priorities of all the packet data recorded in the transmission buffer (TX buffer) 402 (in ST705) when the amount of packet data stored in the transmission buffer (TX buffer) 402 does not exceed the maximum amount of data which can be transmitted to the base station 103 at a time (in ST703) .

To be more specific, assuming that voice data having a priority level of 5 and dynamic-image data having a priority level of 3 other than TV data already exist in the transmission buffer (TX buffer) 402, when TV telephone image data having a priority level of 4, static-image data having a priority level of 2, and character-string data having a priority level of 1 are delivered from the upper layer processing block unit (Upper Layer) 401 to the transmission buffer (TX buffer) 402, and the amount of packet data stored in the transmission buffer (TX buffer) 402 exceeds the maximum amount of data which can be transmitted to the base station 103 at a time, the priority control unit (Priority Control) 405 selects packet data which is scheduled to be transmitted to the base station 103 for the next time according to the predetermined format which defines the range within which the maximum amount of data which can be transmitted to the base station at a time has to fall. When the priority control unit (Priority Control) 405 then selects the voice data having a priority level of 5 and static-image data having a priority level of 2 as packet data which are scheduled to be transmitted to the base station 103 for the next time, the priority control unit defines, as the residual priority (Residual Priority), the highest priority of 4 among the priorities of remaining packet data, i.e., the priority of 3 assigned to dynamic-image data other than TV data, the priority of 4 assigned to TV telephone image data, and the priority of 1 assigned to character-string data.

On the other hand, when TV telephone image data having a priority of 4, static-image data having a priority of 2, and character-string data having a priority of 1 are delivered from the upper layer processing block unit (Upper Layer) 401 to the transmission buffer (TX buffer) 402, and the amount of packet data stored in the transmission buffer (TX buffer) 402 does not exceed the maximum amount of data which can be transmitted to the base station 103 at a time, the priority control unit (Priority Control) 405 defines, as the residual priority (Residual Priority), the highest priority of 5 among the priorities of all the data which are recorded in the transmission buffer (TX buffer) 402, i.e., the priority of 5 assigned to voice data, the priority of 4 assigned to TV telephone image data, the priority of 3 assigned to dynamic-image data other than TV data, the priority of 2 assigned to static-image data, and the priority of 1 assigned to character-string data.

Then, as shown in Figs. 4 and 6, the priority control unit (Priority Control) 405 delivers, as the priority information, the determined residual priority (Residual Priority) to the multiplexing unit (MUX) 407.

Subsequent processes are carried out in the same way as explained in (the case where the transmission of packet data is not the first one).

As previously mentioned, when generating a schedule, such as a transmission timing at which a mobile station transmits packet data to the base station, the base station can get to know in advance priority information which each mobile station staying in the service area provided thereby generates based on the priorities of packet data which each mobile station is trying to transmit to the base station using the transmission buffer, which is disposed as a transmission data storage unit in each mobile station in question. Therefore, the base station can recognize existence of a mobile station which is trying to transmit packet data having a higher priority thereto at an early stage, and can therefore assign a transmission timing etc. to the mobile station in question quickly.

In addition, even though the base station has already assigned a transmission timing etc. to a mobile station which is going to transmit a large volume of packet data having a low priority, for example, if, after that, another mobile station which is going to transmit a small volume of packet data having a higher priority appears in the range covered by the base station, the base station can recognize existence of the other mobile station which is going to transmit packet data having a higher priority upon generating the schedule, and therefore can assign a transmission timing etc. to the other mobile station which is going to transmit packet data having a higher priority to the base station. Therefore, in accordance with the present invention, there is provided a mobile station which can carry out transmission control of packet data at a high speed, and which can make efficient use of radio resources.

When the transmission scheduler of the base station can carry out re-assignment after assigning a transmission timing etc. to each mobile station, even if packet data having a still higher priority is delivered to a mobile station after assigning a transmission timing to each mobile station once, the transmission scheduler of the base station can recognize the residual priority for the mobile station in advance and can assign a transmission timing etc. to the mobile station in question which has the packet data having a higher priority. Therefore, the transmission scheduler of the base station can also reduce the possibility that the transmission timing for packet data which can be assumed to have a high priority by the base station is delayed, and therefore the mobile station can make effective use of radio resources.

In W-CDMA, although one mobile station 102 can carry out a multiple call (Multiple Call) with the base station to carry out a multiple-transmission of a plurality of services using two or more channels, the base station 103 can assign a transmission timing which it uses when communicating with the mobile station 102 to the mobile station 102 by setting plural pieces of priority information to multiplexed packet data, respectively, since the priority control unit 405 of the mobile station 102 generates the plural pieces of priority information based on the priorities of the packet data stored in the transmission buffer 402 before multiplexing the packet data.

The schedule generation of a transmission timing by the base station 103 is not necessarily based on the residual priority (Residual Priority), data size (Queue size), and transmission power margin (Power Margin).

In the above-mentioned embodiment, the mobile station 102 transmits a channel (USICCH) 106 for transmission request to the base station 103 at scheduling time intervals (Scheduling Transmission Interval) defined by the base station 103. As an alternative, when performing time division on packets to be transmitted so as to transmit them in units of a TCP/IP packet, the mobile station 102 can transmit a channel (USICCH) 106 for transmission request to the base station 103 every time when a TCP/IP packet is generated at random.

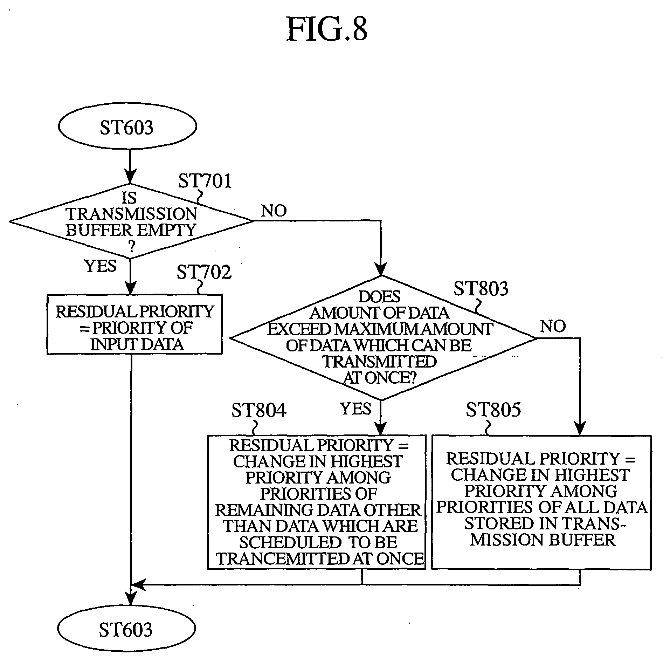

Although the transmission procedure for transmitting packet data in ST603 of Fig. 6 is concretely explained with reference to above-mentioned Fig. 7, the transmission procedure can be the one as shown in Fig. 8.

Fig. 8 is a diagram explaining another example of the transmission procedure for transmitting packet data in ST603 of Fig. 6.

The other example shown in Fig. 8 differs from the example shown in Fig. 7 in which the priority control unit defines the highest priority (Priority) as the residual priority (Residual Priority) (in ST704 and ST705) in that when packet data remains in the transmission buffer (TX buffer) 402 (in ST701) and the residual priority (Residual Priority) is determined again, the priority control unit defines the amount of difference in the highest priority (Priority) among the priorities of packet data stored in the transmission buffer (TX buffer) 402 as the residual priority (Residual Priority) (in ST804 and ST805).

To be more specific, assuming that there already exist voice data of priority of 5 and dynamic-image data of priority of 3 other than TV data in the transmission buffer (TX buffer) 402, when TV telephone image data of priority of 4, static-image data of priority of 2, and character-string data of priority of 1 are delivered from the upper layer processing block unit (Upper Layer) 401 to the transmission buffer (TX buffer) 402, and the amount of data stored in the transmission buffer then exceeds the maximum amount of data which can be transmitted to the base station 103 at a time, the priority control unit (Priority Control) 405 selects packet data which is scheduled to be transmitted to the base station 103 for the next time according to the predetermined format which defines the range within which the maximum amount of data which can be transmitted to the base station at a time has to fall. When the priority control unit (Priority Control) 405 selects the voice data of priority of 5 and static-image data of priority of 2 as the packet data which are scheduled to be transmitted to the base station 103 at a time, the highest priority among the priorities of the remaining packet data, i.e., the priority of 3 assigned to the dynamic-image data other than TV data, priority of 4 assigned to the TV telephone image data, and priority of 1 assigned to the character-string data is 4. Therefore, since the highest priority (Priority) among the priorities of the packet data to be transmitted, i.e., the priority of 5 assigned to the voice data, and priority of 2 assigned to the static-image data is 5, the priority control unit defines the amount of difference of -1 in the highest priority (Priority) as the residual priority (Residual Priority) (in ST804).

On the other hand, when TV telephone image data of priority of 4, static-image data of priority of 2, and character-string data of priority of 1 are delivered from the upper layer processing block unit (Upper Layer) 401 to the transmission buffer (TX buffer) 402, and the amount of data stored in the transmission buffer does not exceed the maximum amount of data which can be transmitted to the base station 103 at a time, the priority control unit (Priority Control) 405 determines, as 5, the highest priority among the priorities of all the data currently being recorded in the transmission buffer (TX buffer) 402, i.e., the priority of 5 assigned to voice data, priority of 4 assigned to the TV telephone image data, priority of 3 assigned to dynamic-image data other than TV data, priority of 2 assigned to the static-image data, and priority of 1 assigned to the character-string data. Then, since the amount of change in the highest priority (Priority) is 0, the priority control unit defines the residual priority (Residual Priority) as 0 (in ST805) .

As an alternative, the priority control unit can define, as the residual priority (Residual Priority), the amount of change in the highest priority among the priorities of remaining packet data other than a total volume of packet data which is scheduled to be transmitted to the base station 103 over a time period during which transmission of packet data is carried out a predetermined number of times. The predetermined number of times that transmission of packet data is carried out can be arbitrarily determined by the mobile station 102 or base station 103.

The priority control unit also performs processes except the above-mentioned processing in the same way as previously explained.

For example, when the highest priority among the priorities of the remaining packet data is greater than that among the priorities of packet data to be transmitted, the priority control unit defines +1 as the residual priority (Residual Priority), when the highest priority among the priorities of the remaining packet data is less than that among the priorities of packet data to be transmitted, the priority control unit defines -1 as the residual priority (Residual Priority), and when the highest priority among the priorities of the remaining packet data is equal to that among the priorities of packet data to be transmitted, the priority control unit defines 0 as the residual priority (Residual Priority).

When the residual priority is determined in this way, the priority control unit forms, as the information on the residual priority (Residual Priority), a signal having one of only three values: +1, -1, and 0 without having to use the priority itself. Therefore, the amount of the residual priority data transmitted to the base station (Node-B) 103 is reduced compared with the case where the information on the priority numerical value itself is transmitted to the base station.

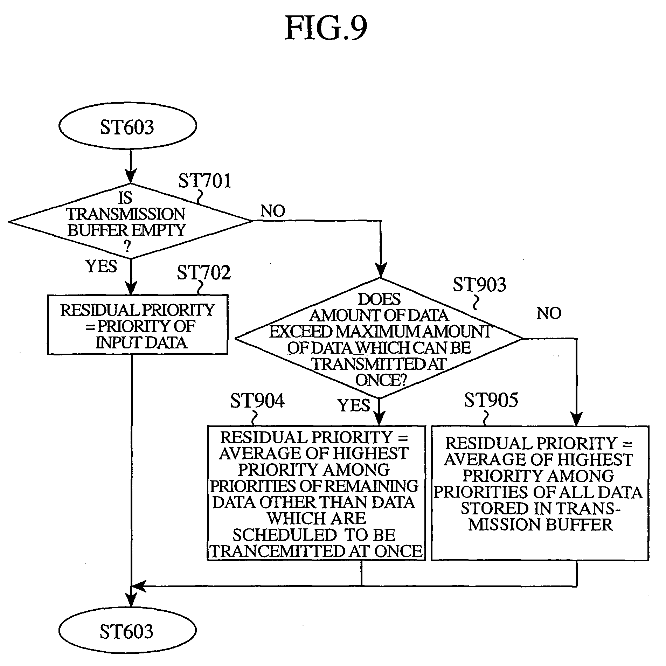

Although the transmission procedure for transmitting packet data in ST603 of Fig. 6 is concretely explained with reference to above-mentioned Fig. 7, the transmission procedure can be the one as shown in Fig. 9.

Fig. 9 is a diagram explaining another example of the transmission procedure for transmitting packet data in ST603 of Fig. 6.

The other example shown in Fig. 9 differs from the example shown in Fig. 7 in which the priority control unit defines the highest priority (Priority) as the residual priority (Residual Priority) (in ST704 and ST705) in that when packet data remains in the transmission buffer (TX buffer) 402 (in ST701) and the residual priority (Residual Priority) is determined again, the priority control unit defines the average of the priorities (Priority) of packet data stored in the transmission buffer (TX buffer) 402 as the residual priority (Residual Priority) (in ST904 and ST905).

To be more specific, assuming that there already exist voice data of priority of 5 and dynamic-image data of priority of 3 other than TV data in the transmission buffer (TX buffer) 402, when TV telephone image data of priority of 4, static-image data of priority of 2, and character-string data of priority of 1 are delivered from the upper layer processing block unit (Upper Layer) 401 to the transmission buffer (TX buffer) 402, and the amount of data stored in the transmission buffer then exceeds the maximum amount of data which can be transmitted to the base station 103 at a time, the priority control unit (Priority Control) 405 selects packet data which is scheduled to be transmitted to the base station 103 for the next time according to the predetermined format which defines the range within which the maximum amount of data which can be transmitted to the base station at a time has to fall. When selecting the voice data of priority of 5 and static-image data of priority of 2 as the packet data which are scheduled to be transmitted to the base station 103 at a time, the priority control unit (Priority Control) 405 calculates the average 2.666666 of the priorities of the remaining data, i.e., the dynamic-image data of priority of 3 other than TV data, TV telephone image data of priority of 4, and character-string data of priority of 1, and defines the average or an integer value of 3 (in this case, the nearest integer to which the average is rounded off), such as an index value corresponding to the average, as the residual priority (Residual Priority) (in ST904) . In order to determine an index value, it is necessary to specify a predetermined communications method of carrying out communications between the mobile station 102 and the base station 103, or to use a predetermined signal at the time of start of transmission of data between the mobile station 102 and the base station 103.

On the other hand, when TV telephone image data of priority of 4, static-image data of priority of 2, and character-string data of priority of 1 are delivered from the upper layer processing block unit (Upper Layer) 401 to the transmission buffer (TX buffer) 402, and the amount of data stored in the transmission buffer does not exceed the maximum amount of data which can be transmitted to the base station 103 at a time (in ST903), the priority control unit (Priority Control) 405 determines, as 3, the average of the priorities (Priority) of all the data currently being recorded in the transmission buffer (TX buffer) 402, i.e., the priority of 5 assigned to voice data, priority of 4 assigned to the TV telephone image data, priority of 3 assigned to dynamic-image data other than TV data, priority of 2 assigned to the static-image data, and priority of 1 assigned to the character-string data (in ST905).

As an alternative, the priority control unit can define, as the residual priority (Residual Priority), the average of the priorities of the remaining packet data other than a total volume of packet data which is scheduled to be transmitted to the base station 103 over a time period during which transmission of packet data is carried out a predetermined number of times. The predetermined number of times that transmission of packet data is carried out can be arbitrarily determined by the mobile station 102 or base station 103.

The priority control unit also performs processes except the above-mentioned processing in the same way as previously explained.

Instead of the average of the priorities (Priority) of packet data, the priority control unit can define the average of the sum of the priorities (Priority) and the amount of data as the residual priority.

In the case where the residual priority is determined in this way, when two or more packet data to be transmitted are multiplexed, since the base station 103 can schedule a transmission timing at which it uses for communications with the mobile station 102 based on either the average of the priorities (Priority) of the multiplexed packet data to be transmitted or the average of the sum of the priorities (Priority) and the amount of data, the base station 103 can set the residual priority which is optimized for all the packet data stored in the transmission buffer 402.

### Embodiment 2.

The invention according-to embodiment 2 will be explained with reference to the accompanying drawings.

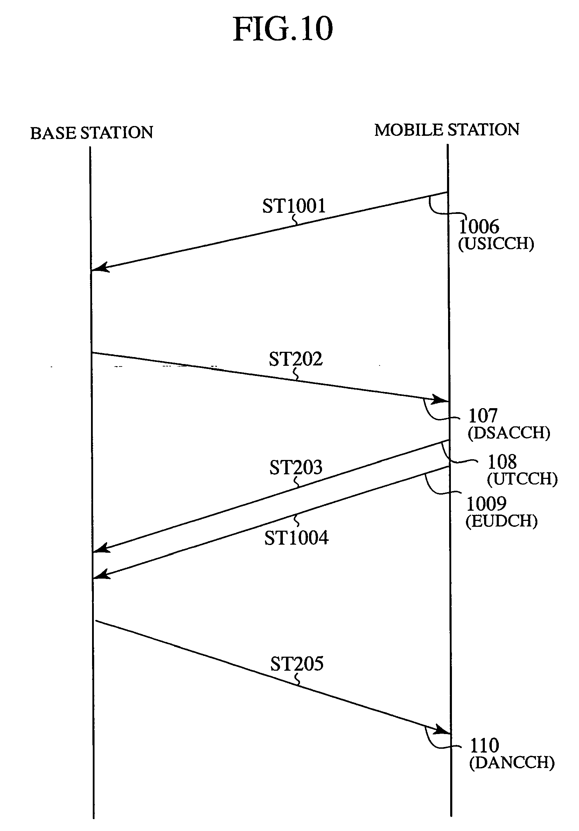

Fig. 10 is a diagram showing a transmission procedure for transmitting packet data between a mobile station and a base station in accordance with embodiment 2 of the present invention.

The transmission procedure shown in Fig. 10 differs from the transmission procedure, as shown in Fig. 2, for transmitting packet data between the mobile station and the base station in accordance with embodiment 1 of the present invention in that the mobile station of this embodiment, in ST1001 and ST1004, sends out residual priority information (Residual Priority) onto a channel (EUDCH) 1009 for data transmission to transmit it to the base station 103, in contrast to the case of Fig. 2 where the mobile station 102 sends out the residual priority information (Residual Priority) onto a channel (USICCH) 106 for transmission request to transmit it to the base station 103.

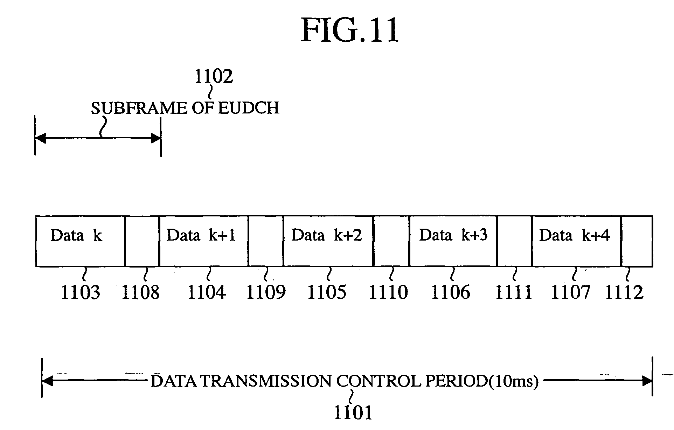

Fig. 11 is a diagram showing an example of the channel format of the channel for data transmission including the residual priority information.

In Fig. 11, one data transmission control interval (Scheduling Transmission Interval) 1101 having a time length of, e.g., 10ms (milliseconds) is divided into five subframes (EUDCH Subframe) 1102, for example. That is, one data transmission control interval is divided into data section k (Data k) 1103 to data section k+4 (Data k+4) 1107, and the corresponding subframes are transmitted, respectively. Residual priority information k (Residual Priority k) 1108 to residual priority information k+4 (Residual Priority k+4) 1112 are added to the tail ends of the data subframes k to k+4, respectively.

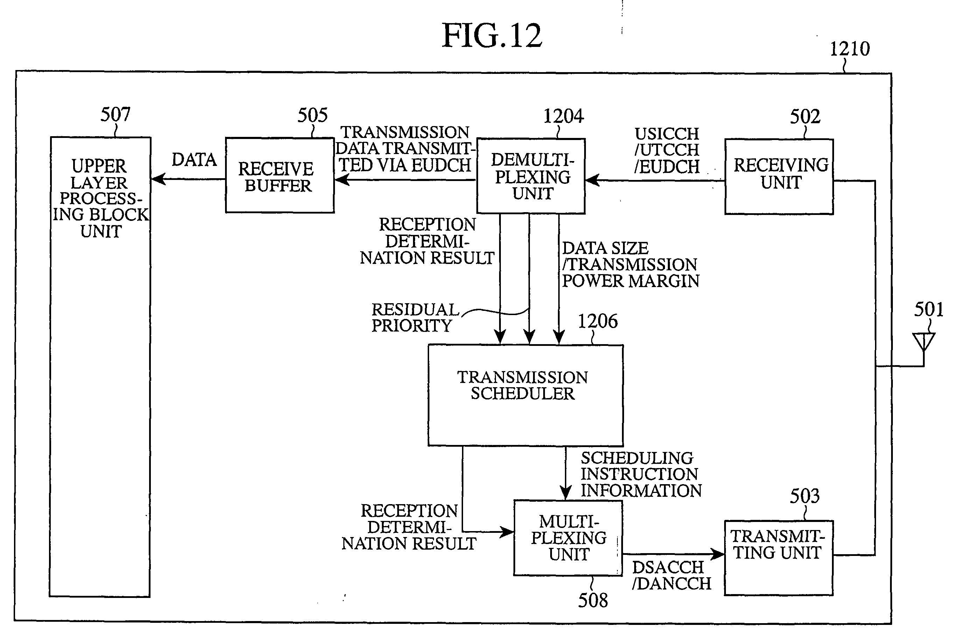

Fig. 12 is a diagram showing the structure of the base station in accordance with embodiment 2 of the present invention.

In Fig. 12, the base station 1210 differs from the base station 103 in accordance with embodiment 1 of the present invention shown in Fig. 5, which receives all of the size information (Queue Size) on the size of packet data, residual priority information (Residual priority), and transmission power margin information (Power margin) at the same timing, in that the base station 1210 receives the residual priority information (Residual priority) as priority information from the mobile station 102 at a receiving timing different from that at which it receives the size information (Queue Size) on the size of packet data, and transmission power margin information (Power margin) .

In Fig. 12, a demultiplexing unit (DEMUX) 1204 of the base station 1210 extracts the size information (Queue Size) on the size of packet data, and transmission power margin information (Power margin) from the channel (USICCH) 1006 for transmission request which is received from a receiving unit (RX) 502, and outputs it to a transmission scheduler (Scheduler) 1206. The demultiplexing unit (DEMUX) 1204 also extracts information indicating the type of modulation (TFRI) from a type-of-modulation information channel (UTCCH) 108, demodulates the channel (EUDCH) 1009 for data transmission using this type of modulation (TFRI) so as to extract transmitted data itself and the residual priority information (Residual Priority) from the channel (EUDCH) 1009 for data transmission, and outputs them to a receive buffer (RX buffer) 507.

Every time when the data extracted from each of the channels is input to the receive buffer (RX buffer) 505, the demultiplexing unit (DEMUX) 1204 determines whether or not the input data is correct, and, when determining that the input data is correct, outputs ACK, as determination result information, to a multiplexing unit (MUX) 508 via the transmission scheduler (Scheduler) 1206, and outputs NACK, as determination result information, to the multiplexing unit (MUX) 508 otherwise. When the determination result is NACK, the multiplexing unit discards the transmitted data itself.

The transmission scheduler (Scheduler) 1206 determines a transmission channel and a schedule, such as a transmission timing, at a time when the base station transmits and receives data to and from each mobile station 102 according to the size information (Queue Size) on the size of packet data which is a target of the request for permission of transmission and transmission power margin information (Power margin), which are sent out onto the channel (USICCH) 106 for transmission request by each mobile station 102, and residual priority information (Residual priority) as priority information which are sent out onto the channel (EUDCH) 1009 for data transmission by each mobile station 102. The transmission scheduler (Scheduler) 1206 then outputs the scheduling result information (Scheduling assignment) to the multiplexing unit (MUX) 508.

Next, the transmission procedure for transmitting packet data between the mobile station and the base station in accordance with embodiment 2 of the present invention will be explained.

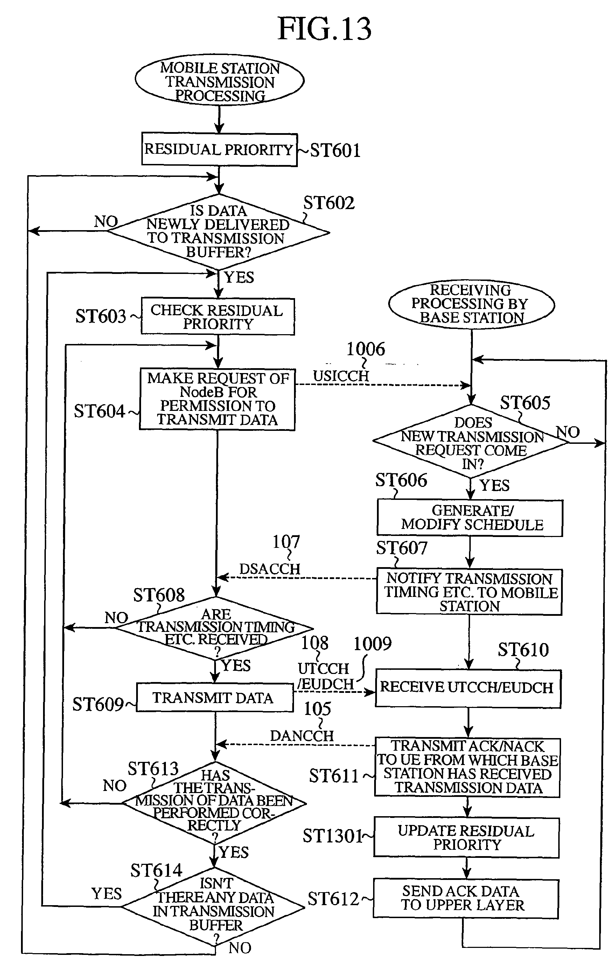

Fig. 13 is a diagram showing the transmission procedure for transmitting packet data between the mobile station and the base station in accordance with embodiment 1 of the present invention.

The transmission procedure in accordance with this embodiment differs from the transmission procedure for transmitting packet data between the mobile station and the base station in accordance with embodiment 1 of the present invention shown in Fig. 6 in that the transmission procedure of this embodiment additionally includes ST1301 between ST611 and ST612.

Steps ST609 to ST612 of the transmission procedure, which include the difference portion between this embodiment and embodiment 1 of the invention will be explained below.

In Figs. 4 and 13, the packet transmission control unit (Packet TX Control) 403 specifies and notifies the transmission timing (TX timing) to the transmission buffer (TX buffer) 402 based on the scheduling result information (Scheduling Assignment) received from the base station 103, and the transmission buffer (TX buffer) 402 reads the information (EUDCH TX data) on the transmission data itself included in each (Data) of the two or more packet data, and outputs the information (EUDCH TX data) on the transmission data itself to the multiplexing unit (MUX) 407.

The modulation control unit (TFRI Control) 404 determines the type of modulation for transmission of packet data to the base station 103 according to a transmission time period (MAP) during which the mobile station in question is permitted to transmit packet data to the base station 103 by the base station, and delivers information indicating the type of modulation, as type-of-modulation information (TRFI), to the multiplexing unit (MUX) 407. The modulation control unit (TFRI Control) 404 also outputs the data size (Queue Size) to the multiplexing unit (MUX) 407.

Furthermore, the priority control unit (Priority Control) 405 determines residual priority information (Residual Priority) based on the priority (Priority) delivered from the transmission buffer (TX buffer) 402, and outputs the residual priority information to the multiplexing unit (MUX) 407.

A method of determining the residual priority information (Residual Priority) is as explained in embodiment 1.

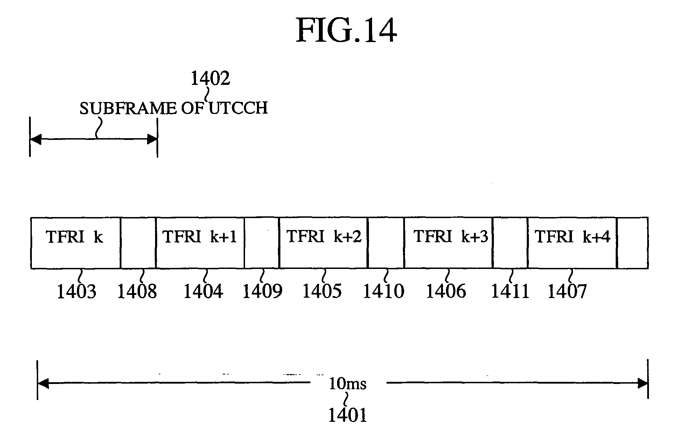

Then, the multiplexing unit (MUX) 407 modulates the information (EUDCH TX data) on the transmission data itself based on the type-of-modulation information (TRFI), and multiplexes it and the residual priority information (Residual Priority) to form a channel (EUDCH) 109 for data transmission for, for example, every subframe (EUDCH Subframe), as shown in below-mentioned Fig. 14, and forms a type-of-modulation information channel (UTCCH) 108 from the type-of-modulation information (TRFI). After code multiplexing these channels, the multiplexing unit outputs them to the transmitting unit (TX) 408.

Then, the transmitting unit (TX) 408 converts the type-of-modulation information channel (UTCCH) 108 and channel (EUDCH) 109 for data transmission into radio frequency signals by using a known technique, and amplifies the radio frequency signals so that they have transmission power required for transmission by using a known technique based on the transmission power control information (Power) delivered from the transmission power control unit (Power Control) 406. The transmitting unit outputs the-amplified radio frequency signals to the transmission antenna 409, and the transmit/receive antenna 409 transmits the radio frequency signals to the base station 103 (in ST609).

Then, the transmit/receive antenna 501 of the base station (Node-B) 1210 receives the radio frequency signals transmitted from the mobile station 102 via various uplink channels including the type-of-modulation information channel (UTCCH) 108 and channel (EUDCH) 109, and outputs them to the receiving unit (RX) 502 (in ST610).

The receiving unit (RX) 502 converts the various radio frequency signals received via the type-of-modulation information channel (UTCCH) 108 and channel (EUDCH) 109 for data transmission into baseband signals by using a known technique, and outputs them to the demultiplexing unit (DEMUX) 1204.

The demultiplexing unit (DEMUX) 1204 extracts the information indicating the type of modulation (TFRI) from the type-of-modulation information channel (UTCCH) 108, and demodulates the baseband signals received via the channel (EUDCH) 109 for data transmission so as to extract the residual priority information (Residual Priority) and the transmitted data (EUDCH TX data) itself from the channel (EUDCH) 109 for data transmission using the type of modulation (TFRI). The demultiplexing unit (DEMUX) 1204 then determines whether or not the transmitted and extracted data (EUDCH TX data) is correct, and, when determining that the transmitted and extracted data is correct, delivers the transmitted and extracted data (EUDCH TX data) itself to the receive buffer (RX buffer) 505. On the other hand, when determining that the transmitted and extracted data is not correct, the demultiplexing unit (DEMUX) 1204 discards the transmitted data (EUDCH TX data) itself.

When determining that the transmitted and extracted data is correct, the demultiplexing unit (DEMUX) 1204 outputs ACK, as determination result information, to the multiplexing unit (MUX) 508 via the transmission scheduler (Scheduler) 1206, and outputs NACK, as determination result information, to the multiplexing unit (MUX) 508 otherwise.

Then, the multiplexing unit (MUX) 508 sends out the determination result information (ACK/NACK) onto a channel (DANCCH) 110 for notification so as to transmit it to the mobile station (UE) 102 via the transmitting unit (TX) 503 and transmit/receive antenna 501 (in ST611).

Then, the transmission scheduler (Scheduler) 1206 updates the residual priority (Residual Priority), which the base station uses to generate a schedule of channels via which the base station transmit and receive packet data to and from each mobile station 102 and a schedule of transmission channels, according to the residual priority information (Residual Priority) extracted from the channel (EUDCH) 109 for data transmission (in ST1301).

Next, the receive buffer (RX buffer) 505 outputs packet data correctly received to the upper layer processing block unit (Upper Layer) 507 (in ST612).

As mentioned above, since the mobile station can send the residual priority information (Residual Priority), as well as with the packet data (EUDCH TX data) itself on which time division is performed, on the channel (EUDCH) for data transmission so as to transmit them to the base station, the base station can update the residual priority (Residual Priority) for every packet data on which time division is performed even if the amount of the packet data to be transmitted is large, and the base station can therefore carry out schedule generation for assigning channels and a transmission timing to the mobile station at an opportuner time. As a result, the communications system can carry out transmission control of the whole system between the mobile station and the base station at a high speed, and can make more efficient use of radio resources.

Since the mobile station transmits packet data to the base station with time division multiplexing, the receiving performance of the base station it can be improve because of the time diversity effect.

In addition, since the mobile station can send the residual priority information (Residual Priority) on the channel (EUDCH) for data transmission for every subframe (EUDCH Subframe) so as to transmit it to the base station, and the base station can update the residual priority information (Residual Priority) for every subframe (EUDCH Subframe), the base station can carry out schedule generation for assigning channels and a transmission timing to the mobile station at an opportuner time.

The mobile station can alternatively send the residual priority information (Residual Priority) on the type-of-modulation information channel (UTCCH) 108 so as to transmit it to the base station 103.

Fig. 14 is a diagram showing an example of the channel format of the type-of-modulation information channel including the residual priority information.

In Fig. 14, one data transmission control interval (Scheduling Transmission Interval) 1401 having a time length of, e.g., 10ms (milliseconds) is divided into five subframes (UTCCH Subframe) 1402, for example, like that for the channel (EUDCH) for data transmission 109 as shown in Fig. 11. That is, one data transmission control interval is time-divided into type-of-modulation information section k (TFRI k) 1403 to type-of-modulation information section k+4 (TFRI k+4) 1407, and the corresponding subframes are transmitted, respectively. Residual priority information k (Residual Priority k) 1408 to residual priority information k+4 (Residual Priority k+4) 1412 are added to the tail ends of the type-of-modulation information subframes k to k+4, respectively.

The transmission procedure for transmitting packet data between the mobile station 102 and the base station 1210 is the same as that in the case where the residual priority information (Residual Priority) is sent out onto the channel (EUDCH) 109 for data transmission so as to transmit it from the mobile station 102 to the base station 1210, and the same advantage is therefore provided.

Unlike the case as shown in Fig. 11, the mobile station can mix the residual priority information (Residual Priority) with packet data (EUDCH TX data) itself and send out them on the channel (EUDCH) for data transmission so as to transmit them to the base station. In this case, the same advantage can be provided. The mobile station can alternatively mix the residual priority information (Residual Priority) and type-of-modulation information (TFRI) and send out them onto the type-of-modulation information channel (UTCCH) 108 so as to transmit them to the base station 103. Also in this case, the same advantage can be provided.

### Embodiment 3.

The invention according to embodiment 3 will be explained with reference to the accompanying drawings.

In accordance with embodiment 3, a base station 103 or 1210 uses not only residual priority (Residual Priority) transmitted from a mobile station 102 but also the priority (Priority) of packet data itself, as priority information used for determining a schedule such as a transmission timing at which the base station communicates with each mobile station 102, and switches between them according to an operation mode. Assume that the priority (Priority) of packet data itself is either a priority which a sender written in the header portion of the packet data to be transmitted from the mobile station to the base station desires, which is disclosed in patent reference 2 explained in Background of the Invention, or the type of the packet data, for example.

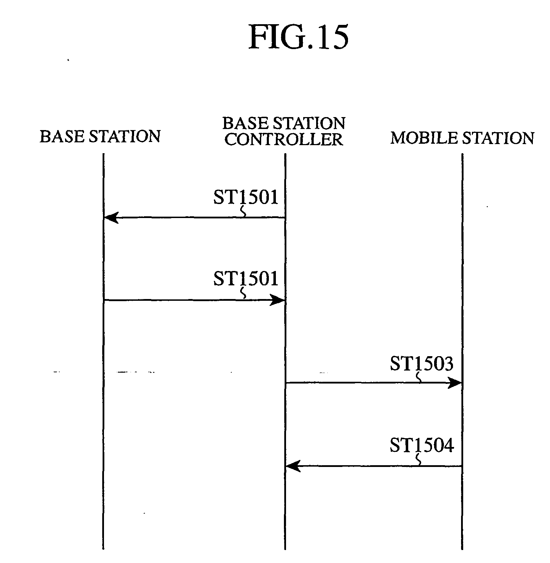

Fig. 15 is a sequence diagram of operation mode switching processing for setting of priority information in accordance with embodiment 3 of the present invention.

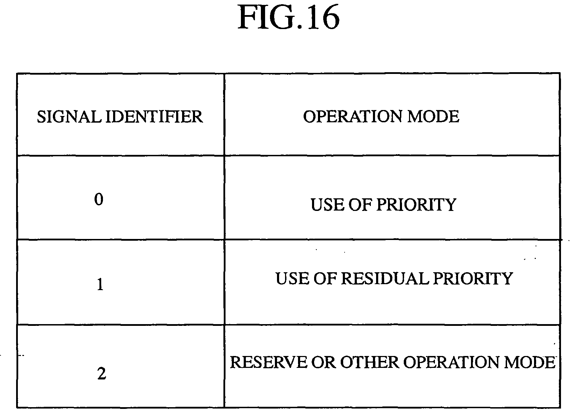

Fig. 16 is a diagram showing a signaling list for switching among operation modes for the mobile station, the base station, and a base station controller in accordance with embodiment 3 of the present invention.

In Figs. 15 and 16, the base station controller (RNC) 104 transmits a request for switching among operation modes (Change Request) for setting of priority information to the base station (Node-B) 103 or 1210 (in ST1501).

Here, signaling for the switching among operation modes for setting of priority information will be explained with reference to Fig. 16.

In Fig. 16, an signal identifier (Signaling Index) is defined as "0" in a case where the base station simply determines the priority information based on the priority (Priority) of each of two or more packet data which the mobile station 102 is going to transmit to the base station, as "1" in a case where the base station determines the priority information based on the residual priority (Residual Priority) which is set in consideration of packet data currently being recorded in the transmission buffer (TX buffer), and as "2" in any other cases.

Then, the base station (Node-B) 103 or 1210 switches among the operation modes for setting of priority information according to the switching request (Change Request) to switch among the operation modes, which is received from the base station controller (RNC) 104, and transmits a notification indicating the completion of the switching (Change Complete) to the base station controller (RNC) 104 (in ST1502).

Then, the base station controller (RNC) 104 transmits a switching request (Change Request) to switch among the operation modes for setting of priority information to the mobile station (UE) 102 after recognizing the completion of switching among the operation modes for setting of priority information on the side of the base station (RNC) 103 (in ST1503).

Then, the mobile station (UE) 102 switches among the operation modes for setting of the priority information according to the switching request (Change Request) to switch among the operation modes, which is received from the base station controller (RNC) 104, and transmits a notification indicating the completion of the switching (Change Complete) to the base station controller (RNC) 104 (in ST1504).

In accordance with the related art W-CDMA technology, the exchange of signals between the base station 103 and the base station controller (RNC) 104 is called Sub signaling, and the exchange of signals between the base station controller (RNC) and the mobile station (UE) is called RRC signaling.

As previously explained, since the base station can switch among the operation modes for setting of the priority information which it uses to generate a schedule such as a transmission timing at which it communicates with the mobile station, the communications system can optimize the schedule generating operation of the base station according to communications environments, and can therefore carry out transmission control of packet data at a higher speed and can make more efficient use of radio resources.

### Embodiment 4.

The invention according to embodiment 4 will be explained with reference to the accompanying drawings.

Embodiment 4 relates to an on-demind type channel assignment method for time-dividing the timing of transmission and reception periodically, and performing retransmission processing independently for each division, which is suitable for a parallel retransmission method (N channel Stop and Wait) . N is the number of sections into which the timing of transmission and reception is divided.

Fig. 17 is a diagram showing a principle-of-operation timing chart of the parallel retransmission method which is the on-demind type channel assignment method. In Fig. 17, a subframe time length is set to 2ms, and the number N of sections into which the timing of transmission and reception is divided to is set to 5.

Various channels are shown in Fig. 17 while running along the vertical axis of Fig. 17. Each packet data is sequentially processed on time-division basis. The horizontal axis of the figure shows a time (time). Plural pieces of information on channels corresponding to time-divided retransmission processing channels Ch.1 to Ch.5, i.e., plural pieces of transmission request information on a channel 106 (USICCH) for transmission request, plural pieces of scheduling instruction information on a channel (DSACCH) 107 for assignment, plural data to be transmitted on a channel (EUDCH) 109 for data transmission, and plural pieces of base station reception determination result information on a channel (DANCCH) 110 for notification are REQ1 to REQ5, ASS1 to ASS5, DATA1 to DATA5, and ACK1 to ACK5, respectively. At least residual priority (Residual Priority) explained in embodiments 1 to 3 is superimposed onto the transmission request information. Plural pieces of information on a type-of-modulation information channel (UTCCH) 108 are processed at the same timing when DATA1 to DATA5 of the data to be sent out onto the above-mentioned channel (EUDCH) 109 for data transmission are processed.

The time division processing advances with time in the order of the channel 106 for transmission request, channel (DSACCH) 107 (USICCH) for assignment, channel (EUDCH) 109 for data transmission, and channel (DANCCH) 110 for notification.

After information ACK1 indicating the completion of transmission of packet data is transmitted from the mobile station 102 to the base station 103, REQ1 is assigned to Ch.1 again and the same processing is repeated.

The processing of Fig. 17 will be concretely explained.

In Fig. 17, the mobile station 102 sends out the transmission request information REQ1 onto the channel (USICCH) 106 for transmission request so as to transmit it to the base station 103, and, when subsequent data to be transmitted exist, the mobile station 102 transmits REQ2 to REQ5 to the base station 103.

When receiving the transmission request information REQ1, a transmission scheduler (Scheduler) 506 of the base station 103 generates a schedule such as a transmission timing at which the base station communicates with the mobile station 102, and so on according to this information, and transmits this scheduling result information ASS1 to the mobile station 102. Similarly, for the subsequent pieces of transmission request information REQ2 to REQ5, plural pieces of scheduling instruction information ASS2 to ASS5 are transmitted to the mobile station 102 one by one.

Then, the mobile station 102 transmits the data to be transmitted DATA1 to the base station 103 according to the scheduling instruction information ASS1. Similarly, the mobile station 102 also transmits DATA2 to DATA5 to the base station 103 one by one.

Then, the base station 103 transmits the reception determination result information ACK1 to the mobile station 102 after receiving DATA1. Similarly, the base station 103 also transmits ACK2 to ACK5 to the mobile station 102 one by one.

After receiving the reception determination result information ACK1, the mobile station 102 transmits the new transmission request REQ1 to the base station 103 at a time of a subframe next to those included in the same divided frame while associating new data which is to be transmitted to the base station with the new transmission request. Similarly, the mobile station 102 transmits a new transmission request, which is associated with data which is to be transmitted to the base station for the subsequent time, to the base station 103 even at a different time of another subframe.

Fig. 18 is a diagram showing the internal structure of a transmission buffer of the mobile station in accordance with embodiment 3 of the present invention.

In Fig. 18, the transmission buffer (TX buffer) 402, which is disposed as a transmission data storage unit, constitutes a part of the structure of the mobile station 102 shown in Fig. 4.

A memory 1601 for data (Data memory) temporarily stores at least one or more packet data (Data) delivered from an upper layer block processing unit (Upper Layer) 401, and time-divides each packet data into several parts and outputs them to a buffer 1602 for retransmission (S&W buffer) one by one. The buffer 1602 for retransmission (S&W buffer) temporarily stores packet data (Data) into which each original packet data is time-divided for the retransmission processing on a subframe-by-subframe basis. A first selector (Selector 1) 1603 assigns at least one or more packet data into which each original packet data is time-divided and which is delivered from the memory 1601 for data (Data memory) to a memory 1 (Ch.1 memory) 1604-1 for retransmission, a memory 2 (Ch.2 memory) 1604-2 for retransmission, ..., and a memory N(Ch.N memory) 1604-N for retransmission in order to carry out retransmission processing, based on the transmission timing (TX timing) delivered from a packet transmission control unit (Packet TX Control) 403. Each of the memory 1 (Ch.1 memory) 1604-1 for retransmission, memory 2 (Ch.2 memory) 1604-2 for retransmission, ..., and memory N (Ch.N memory) 1604-N for retransmission stores packet data (Data) which is a target of each retransmission processing. A second selector (Selector 2) 1605 selects packet data (Data) which is to be transmitted to the base station based on the transmission timing (TX timing) delivered from the packet transmission control unit (Packet TX Control) 403.

Next, the operation of the transmission buffer (TX buffer) 402 will be explained. When receiving packet data (Data) delivered from the upper layer block processing unit (Upper layer) 401, the transmission buffer (TX buffer) 402 temporarily stores the packet data in the memory 1601 for data (Data memory).

Then, the memory 1601 for data (Data memory) delivers the transmission data size (Queue size) information stored in the memory 1601 for data in question (Data memory) to a modulation control unit (TFRI Control) 404 based on the data size of the delivered packet data (Data), and also delivers the priority (Priority) to a priority control unit (Priority Control) 405.

Then, the first selector (Selector 1) 1603 assigns at least one or more packet data into which each original packet data is time-divided and which are delivered from the memory 1601 for data (Data memory) to the memory 1 (Ch.1 memory) 1604-1 for retransmission, memory 1 (Ch.1 memory) 1604-2 for retransmission, ..., and memory N (Ch.N memory) 1604-N for retransmission for each retransmission processing based on the transmission timing (TX timing) delivered from the packet transmission control unit (Packet TX Control) 403.

When receiving the transmission timing (TX timing) from the packet transmission control unit (Packet TX Control) 403, the second selector (Selector 2) 1605 selects the memory 1 (Ch.1 memory) 1604-1 for retransmission, memory 2 (Ch.1 memory) 1604-2 for retransmission, ..., and memory N (Ch.N memory) 1604-N for retransmission in which the packet data (Data) to be transmitted into which each original packet data is time-divided are stored, respectively, and outputs the time-divided data (EUDCH TX data) temporarily and respectively stored in the memories 1 to N for retransmission to the multiplexing unit (MUX) 407. Furthermore, at the same time when the second selector (Selector 2) 1605 operates, the first selector (Selector 1) 1603 newly assigns at least one or more packet data into which other original packet data is time-divided and which are delivered from the memory 1601 for data (Data memory) to the memory 1 (Ch.1 memory) 1604-1 for retransmission, memory 1 (Ch.1 memory) 1604-2 for retransmission, ..., and memory N (Ch.N memory) 1604-N for retransmission for each retransmission processing based on the transmission timing (TX timing) delivered from the packet transmission control unit (Packet TX Control) 403.

Next, the setting of the residual priority (Residual Priority) and the transmission operation to the base station 103 in accordance with embodiment 3 of the present invention will be explained.

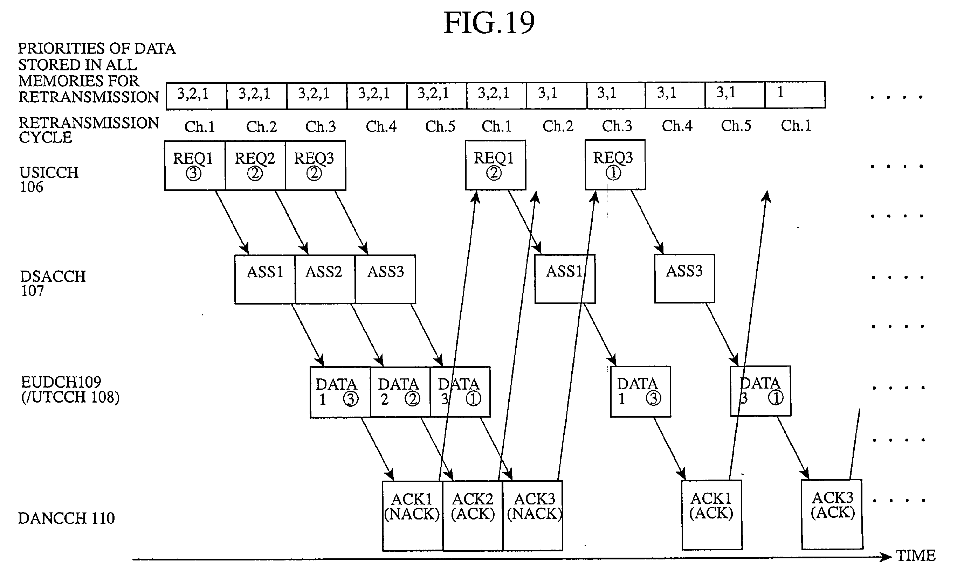

Fig. 19 is a diagram showing a principle-of-operation timing chart of a parallel retransmission method which is an on-demind type channel assignment method, and is a diagram for especially explaining the setting of the residual priority and the transmission operation to the base station.

In Fig. 19, the vertical axis shows various channels, and the horizontal axis shows time, as in the case of Fig. 17.

In Fig. 19, it is assumed that packet data of priority of 1, packet data of priority of 2, and packet data of priority of 3 are initially stored in the memory 1 (Ch.1 memory) 1604-1 for retransmission, ..., and memory 3 (Ch.3 memory) for retransmission, respectively, in units of one of equal sections into which the transmission timing length is time-divided.

The priorities (Priority) of packet data which are temporarily stored in all the memories 1 to 5 (Ch.1 memory to Ch.5 memory) 1604-1 to 1604-5 for retransmission at intervals of one of equal sections into which the transmission timing are shown in the uppermost part of the vertical axis.

The priority control unit (Priority Control) 405 determines the residual priority (Residual Priority) which is to be superimposed onto each of plural pieces of transmission request information REQ1 to REQ3 based on the priorities which are shown in the uppermost column of the vertical axis at intervals of one of equal sections into which the transmission timing length is time-divided. A number shown in a circle in each interval of the transmission request channel (USICCH) 106 of Fig. 19, into which the transmission timing length is time-divided, shows the residual priority value which is superimposed onto the transmission request information REQ in question. A number shown in a circle in each of packet data (DATA) into which each original packet data associated with each of the channel (EUDCH) 109 for data transmission and type-of-modulation information channel (UTCCH) 108 is time-divided shows the value of the priority (Priority) of each of the packet data (DATA) in question into which each original packet data is time-divided. In Fig. 19, ACK or NACK shown in a parenthesis of each ACK data which is transmitted at intervals of one of equal sections into which the transmission timing length is time-divided shows the reception determination result of the packet data in question. When the base station 103 can receive the packet data transmitted from the mobile station 102 correctly, the reception determination result is ACK, and the reception determination result is NACK otherwise.

Next, an explanation of the processing shown in Fig. 19 will be made.

In Fig. 19, it is assumed that packet data of priority of 1, packet data of priority of 2, and packet data of priority of 3 are stored in the memory 1 (Ch.1 memory) 1604-1 for retransmission, ..., and memory 3 (Ch.3 memory) for retransmission, respectively, in units of one of equal sections into which the transmission timing length is time-divided.

In Figs. 4 and 19, the priority control unit (Priority Control) 405 sets, as the residual priority (Residual Priority), the highest priority (Priority) of 3 among the priorities of 1, 2, and 3 of the packet data stored in all the memories 1 to 5 for retransmission (Ch.1 memory to Ch.5 memory) 1604-1 to 1604-5 of the transmission buffer (TX buffer) 402 with respect to the first packet data corresponding to Ch.1. The priority control unit also sets the residual priority (Residual Priority) of 3 to the transmission request information REQ1, and the mobile station 102 sends out it onto the transmission request channel (USICCH) 106 to transmit it to the base station 103.

Then, for the second retransmission processing time corresponding to Ch. 2, since the mobile station has not received the reception determination result information (ACK or NACK) corresponding to the packet data (DATA1) of priority (Priority) of 3 of Ch.1, which the mobile station has already made a request of the base station 103 for permission to transmit packet data by transmitting REQ1 to the base station 103, all the packet data of priorities of 3, 2, and 1 will be temporarily stored in the transmission buffer (TX buffer) 402 till then. At this time, since the amount of all the packet data of priorities of 3, 2, and 1 stored in the transmission buffer (TX buffer) 402 exceeds the maximum amount of data which can be transmitted to the base station 103 at a time, the maximum amount of data being defined by a predetermined format which is determined in advance between the base station 103 and the mobile station 103, the priority control unit sets, as the residual priority (Residual Priority), the highest priority (Priority) of 2 among the priorities of 2 and 1 of remaining packet data except the packet data which can be transmitted at a time, i.e., the packet data of priority of 3 to REQ2.

Then, for the third retransmission processing time corresponding to Ch. 3, since the mobile station has not received the reception determination result information (ACK or NACK) corresponding to the packet data (DATA1 and DATA2) of priorities (Priority) of 3 and 2 of Ch.1 and Ch.2, which the mobile station has already made a request of the base station 103 for permission to transmit packet data by sequentially transmitting REQ1 and REQ2 to the base station 103, all the packet data of priorities of 3, 2, and 1 will be temporarily stored in the transmission buffer (TX buffer) 402 till then. Also in this case, as in the case of the setting of the residual priority (Residual Priority) to above-mentioned REQ1, since the amount of all the packet data of priorities of 3, 2, and 1 stored in the transmission buffer (TX buffer) 402 exceeds the maximum amount of data which can be transmitted to the base station 103 at a time, the maximum amount of data being defined by the predetermined format which is determined in advance between the base station 103 and the mobile station 103, the priority control unit sets, as the residual priority (Residual Priority), the highest priority (Priority) of 2 among the priorities of 2 and 1 of remaining packet data except the packet data which can be transmitted at a time, i.e., the packet data of priority of 3 to REQ3.

Then, for the fourth and fifth retransmission processing times corresponding to Ch.4 and Ch. 5, since the mobile station 102 has already transmitted the transmission request information (USICCH) 106 associated with all the packet data to the base station 103, the mobile station 102 does not transmit any transmission request information to the base station 103.

Then, since the mobile station 102 fails in the first transmission of packet data to the base station 103 at a send time corresponding to Ch.1, and receives the reception determination result NACK via the channel (DANCCH) 110 for notification from the base station 103, the mobile station 102 retransmits the transmission request information again to the base station 103 in the next retransmission processing cycle (Ch.1). At this time, when the condition of the communications environment for the uplink is bad, there is a possibility that the mobile station repeatedly retransmits the packet data of priority (Priority) of 3 to the base station, and therefore the packet data (DATA1) of priority (Priority) of 3 in question is made to remain in the retransmission memory 1604-01. Also in this case, since the amount of all the packet data (DATA1, DATA2 and DATA 3) of priorities of 3, 2 and 1 stored in the transmission buffer (TX buffer) 402 exceeds the maximum amount of data which can be transmitted to the base station 103 at a time, the maximum amount of data being defined by the predetermined format which is determined in advance between the bas-e station 103 and the mobile station 103, the priority control unit sets, as the residual priority (Residual Priority), the highest priority (Priority) of 2 among the priorities of 2 and 1 of remaining packet data except the packet data which can be transmitted at a time, i.e., the packet data of priority of 3 to REQ1 for retransmission which is to be transmitted in the second cycle.

Then, since the reception determination result for the first transmission of the packet data of priority of 2 is ACK, REQ1 for retransmission in the second cycle is not transmitted. Furthermore, since the packet data (DATA2) of priority of 2 is correctly received by the base station 103, the packet data of priority 2 is deleted from the memories for retransmission.

Then, since the reception determination result for the first transmission of the packet data of priority of 1 is NACK, the mobile station 102 retransmits REQ 3for retransmission in the second cycle to the base station 103. At this time, when the condition of the communications environment for the uplink is bad, there is a possibility that the mobile station repeatedly retransmits the packet data (DATA3) of priority of 1 to the base station, and therefore the packet data (DATA3) is made to remain in the retransmission memory 1604-03. Also in this case, since the amount of the packet data (DATA1 and DATA 3) of priorities of 3 and 1 stored in the transmission buffer (TX buffer) 402 exceeds the maximum amount of data which can be transmitted to the base station 103 at a time, the maximum amount of data being defined by the predetermined format which is determined in advance between the base station 103 and the mobile station 103, the priority control unit sets, as the residual priority (Residual Priority), the priority (Priority) of 1 of the remaining packet data (DATA3) except the packet data which can be transmitted at a time, i.e., the packet data (DATA1) of priority of 3 to REQ3 for retransmission which is to be transmitted in the second cycle.

Then, since the reception determination result for the retransmitted packet data (DATA1 and DATA3) of priorities of 3 and 1 is ACK, the mobile station 102 completes the transmission of the packet data.

As previously explained, the mobile station transmits packet data to be retransmitted to the base station 103 after all packet data are collectively treated. As an alternative, the mobile station can transmit packet data to be retransmitted to the base station 103 after independently and partially processing them every time when carrying out retransmission processing, for example.

As previously explained, since the mobile station can set the residual priority by carrying out time division processing, and can carry out pluralized retransmission processes, respectively, each retransmission process can be carried out during an idle time within which another process is idle even if the retransmission processing cycle for retransmission of each transmission data is long. Therefore, the efficiency of use of radio resources and the communications efficiency (throughput) of the whole system can be,improved.

Another example of embodiment 3 of the present invention will be explained hereafter.

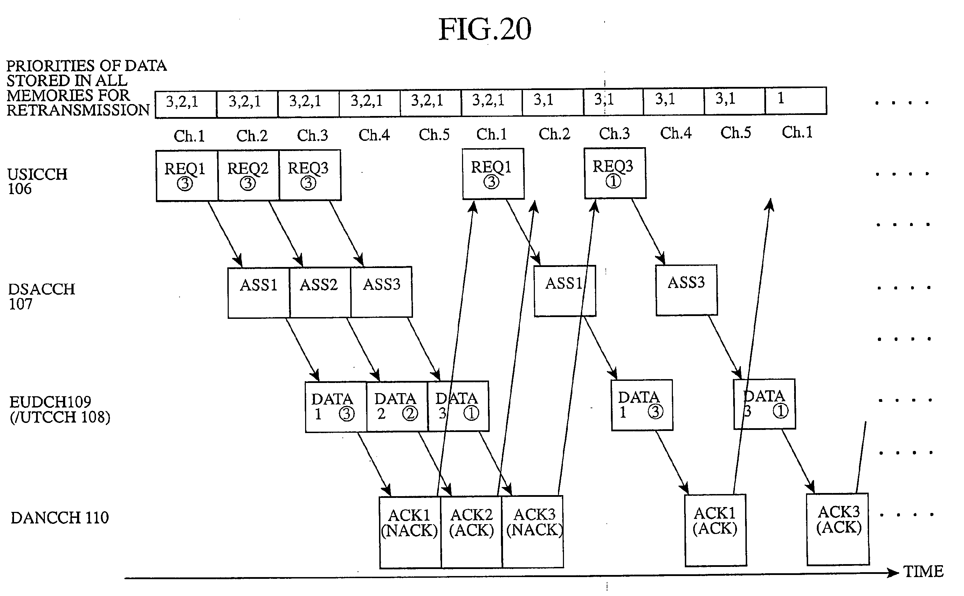

Fig. 20 is a diagram showing a principle-of-operation timing chart of a parallel retransmission method which is an on-demind type channel assignment method, and is a diagram for especially explaining the setting of the residual priority and the transmission operation to the base station.

The other example differs from the above-mentioned example of Fig. 19 in that a requirement not to update the value of the residual priority (Residual Priority) is additionally set until the mobile station receives, as the first reception determination result, ACK sent out onto the channel (DANCCH) 110 for notification from the base station 103.

In Fig. 20, time-divided packet data (DATA1, DATA2, and DATA3) of priorities of 3, 2, and 1 are stored in the memories for retransmission of the transmission buffer (TX buffer) 402, as shown in the uppermost column of the figure.

For the time-divided packet data (DATA1, DATA2, and DATA3), the residual priorities (Residual Priority) which are to be superimposed onto the channel (USICCH) 106 for transmission request are calculated one by one, and are superimposed onto the channel for transmission request, as REQ1, REQ2, and REQ3 and are transmitted to the base station 103.

At this time, in order to meet the requirement not to update the value of the residual priority (Residual Priority) until the mobile station receives, as the first reception determination result, ACK sent out onto the channel (DANCCH) 110 for notification from the base station 103, the residual priorities (Residual Priority) of REQ1, REQ2, and REQ3 are defined as 3, 3, and 3 since each of DATA1, DATA2, and DATA3 is to be transmitted to the base station for the first time. The residual priorities (Residual Priority) of REQ1, REQ2, and REQ3 are higher than those in the above-mentioned case of Fig. 19.

Then, according to the order shown in Fig. 20, DATA1, DATA2, and DATA3 of priorities of 3, 2, and 1 are sequentially superimposed onto the channel (EUDCH) 109 for data transmission or type-of-modulation information channel (UTCCH) 108, and are sequentially transmitted to the base station 103. After sequentially transmitting DATA1, DATA2, and DATA3 of priorities of 3, 2, and 1 to the base station, the mobile station 102 receives ACK1, ACK2, and ACK3 superimposed onto the channel (DANCCH) 110 for notification, which are transmitted from the base station 103, one by one. In this case, assuming that the mobile station 102 receives ACK only for DATA2 of priority of 2, as shown in the lowermost column of Fig. 20, the mobile station needs to retransmit DATA1 of priority of 3 and DATA3 of priority of 1 for each of which it received NACK.

At this time, the mobile station determines the residual priority (Residual Priority) at a time of retransmission of each of DATA1 and DATA 3 as follows:

First, for retransmission of DATA1, when transmitting REQ1 corresponding to DATA1, since the mobile station 102 has not received ACK for DATA2, the mobile station defines, as the residual priority (Residual Priority) at this time, the highest priority f 3 among the priorities (Priority) of 3, 2, and 1 of DATA1, DATA2, and DATA3.

Furthermore, for retransmission of DATA3, since the mobile station 102 has already received ACK for DATA2 at the time when transmitting REQ1 corresponding to DATA1, and sets, as the residual priority (Residual Priority), the priority (Priority) of 1 of the remaining data DATA3 except DATA1 which can be transmitted at a time, among DATA1 of priority of 3 and DATA3 of priority of 1 which are stored in the memories 1604-01 and 1604-03 for retransmission of the transmission buffer (TX buffer) 402.

As previously mentioned, when the amount of the packet data DATA1 of priority of 3 and DATA3 of priority of 1 stored in the transmission buffer (TX buffer) 402 exceeds the maximum amount of data which can be transmitted to the base station 103 at a time, the maximum amount of data being defined by the predetermined format which is determined in advance between the base station 103 and the mobile station 103, the priority control unit sets, as the residual priority (Residual Priority) for retransmission of DATA3, the priority of 1 of DATA3. On the other hand, when the amount of the packet data DATA1 of priority of 3 and DATA3 of priority of 1 stored in the transmission buffer (TX buffer) 402 does not exceed the maximum amount of data which can be transmitted to the base station 103 at a time, the maximum amount of data being defined by the predetermined format which is determined in advance between the base station 103 and the mobile station 103, the priority control unit sets, as the residual priority (Residual Priority), the highest priority of 3 among the priorities (Priority) 3 and 1 of DATA1 and DATA3.

As previously mentioned, since the transmission scheduler of the base station continues the processing for a long time at the time of the first transmission of packet data transmission from a mobile station and nearly at the time of transmission of packet data from a mobile station after the transmission buffer of the mobile station becomes empty, the base station can generate a schedule such as a transmission timing at which the base station communicates with the mobile station by taking into consideration both mobile stations having packet data with high priority and other mobile stations having a large amount of packet data, and can carry out the schedule generating operation optimally. As a result, the communications system can improve the efficiency of use of radio resources.

In each of above-mentioned embodiments, the priority (priority) of each packet data is mainly used in order to set the residual priority (Residual Priority). As an alternative, it is also possible to set the residual priority by additionally using, for example, the data size (Queue size) of each packet data and other information on each packet data.

## Claims

1. A mobile station which transmits and receives packet data to and from a base station according to an assigned schedule such as a transmission timing which said base station determines based on priority information on a priority of each packet data received from each mobile station, **characterized in that** said mobile station comprises:
a transmission data storage unit for temporarily storing at least one or more packet data inputted thereto;
a priority control unit for generating priority information which said base station uses for determination of said schedule in advance based on a priority of at least the one or more packet data stored in said transmission data storage unit; and
a transmitting unit for transmitting the priority information generated by said priority control unit to said base station.

2. The mobile station according to Claim 1, **characterized in that** when at least the one or more packet data are stored in said transmission data storage unit, and packet data is further inputted into said transmission data storage unit and an amount of packet data stored in said transmission data storage unit exceeds an amount of data which can be transmitted, via one transmission, to said base station in a predetermined format which is defined in advance between said base station and said mobile station, said priority control unit generates the priority information in advance based on a priority of at least one or more packet data included in a remainder of the one or more packet data stored in said transmission data storage unit and the packet data further inputted in said transmission data storage unit, other than packet data which are to be transmitted to said base station, a predetermined number of times.

3. The mobile station according to Claim 1, **characterized in that** the priority information is a maximum priority of at least the one or more packet data.

4. The mobile station according to Claim 1, **characterized in that** the priority information is an average of a priority of at least the one or more packet data stored in said transmission data storage unit.

5. The mobile station according to Claim 1, **characterized in that** the priority information is a priority of at least the one or more packet data stored in said transmission data storage unit and calculated using an amount of each data.

6. The mobile station according to Claim 1, **characterized in that** said transmitting unit transmits the priority information generated by the priority control unit to the base station by superimposing it onto a channel for a transmission request which said transmitting unit transmits to said base station before transmitting packet data.

7. The mobile station according to Claim 1, **characterized in that** said transmitting unit transmits the priority information generated by the priority control unit to the base station by superimposing it onto a channel for data transmission via which said transmitting unit transmits packet data to said base station.

8. The mobile station according to Claim 1, **characterized in that** said transmitting unit transmits the priority information generated by the priority control unit to the base station by superimposing it onto a channel for transmission of modulation type information via which said transmitting unit transmits modulation type information, as well as packet data, to said base station.

9. The mobile station according to Claim 1, **characterized in that** the transmission of packet data is carried out on time-division basis, and the transmitting unit sends out priority information generated by the priority control unit for each of plural packet data into which said packet data is time-divided onto a channel for transmission request which it transmits to the base station before transmitting each of said plural packet data to the base station.

10. The mobile station according to Claim 1, **characterized in that** the priority control unit has two or more operation modes for setting of the priority information, the mobile station and the base station transmit and receive a signal for switching between the two or more operation modes for said priority information to and from each other, and, when receiving the signal for switching between the two or more operation modes for said priority information from said base station, the priority control unit switches between the two or more operation modes for the setting of the priority information, and generates the priority information which said base station uses for the determination of said schedule in advance according to one of the two or more operation modes to which another one of them has been switched, based on the priority of at least the one or more packet data stored in the communications data storage unit.

11. The mobile station according to Claim 1, **characterized in that** the transmission data storage unit is provided with two or more memories, performs time division on at least the one or more packet data inputted thereto one by one to generate plural packet data, temporarily stores the plural packet data in said two or more memories, respectively, and outputs priorities of the plural packet data into which each of the one or more data is time-divided to the priority control unit one by one, the priority control unit generates the priority information which said base station uses for the determination of said schedule in advance based on the priorities of the plural packet data which are stored in said two or more memories, respectively, and into which each of the one or more data is time-divided, and the transmitting unit transmits the priority information which the priority control unit generates to said base station for each of the plural packet data into which each of the one or more data is time-divided.

12. The mobile station according to Claim 10, **characterized in that** the priority control unit can receive from the base station a result of determination of whether to have received packet data correctly for each of plural packet data into which each of the one or more data is time-divided, and the priority control unit generates the priority information which said base station uses for the determination of the schedule in advance based on a highest priority among priorities of plural packet data which are stored in two or more memories for a first time and into which each of the one or more data is time-divided until receiving information indicating that the above-mentioned judgment result means that the base station received each of the plural packet data correctly.

13. A communications system **characterized in** comprising:
a mobile station including a transmission data storage unit for temporarily storing at least one or more packet data inputted thereto, a priority control unit for generating priority information which said base station uses for determination of said schedule in advance based on a priority of at least the one or more packet data stored in said transmission data storage unit, and a transmitting unit for transmitting the priority information generated by said priority control unit to said base station; and
said base station including a transmission scheduler for determining a schedule for assigning a transmission timing which it determines based on the priority information on the priority of packet data which it is to receive from said mobile station, and a transmitting unit for notifying the schedule for assigning the transmission timing determined by said transmission scheduler to said mobile station,
and **characterized in that** said base station and said mobile station transmit and receive packet data to and from each other according to the schedule for assigning the transmission timing determined said base station.

14. A communications control method **characterized in** comprising the steps of:
temporarily storing at least one or more inputted packet data in a transmission data storage unit of a mobile station;
generating priority information which said base station uses for determination of said schedule in advance based on a priority of at least the one or more packet data stored in said transmission data storage unit;
transmitting the priority information from said mobile station to said base station; determining a schedule for assigning a transmission timing which is determined based on the priority information on the priority of packet data which said base station is to receive from said mobile station using a transmission scheduler of said base station; and
notifying the schedule for assigning the transmission timing determined by said transmission scheduler to said mobile station, and **characterized in that** said base station and said mobile station transmit and receive packet data to and from each other according to the schedule for assigning the transmission timing determined said base station.
